# EUROPEAN PATENT APPLICATION

(11) **EP 4 571 380 A1**
(43) Date of publication of application: **18.06.2025**
(21) Application number: 24214947.4
(22) Date of filing: 22.11.2024
(51) Int. Cl.: G02B 6/44

(54) **SPLICE MODULE FOR A FIBER OPTIC NETWORK**

(30) Priority: 30.11.2023 US 202363604516 P
(71) Applicant: Corning Research & Development Corporation, Corning, New York 14831 (US)
(72) Inventor: JOBLONSKI, Filip, Piotr, 91-849 Lodz (PL); OZAREK, Dawid, Dariusz, 97-300 Piotrkow Trybunalski (PL); RUDA, Michal, 95-060 Brzeziny (PL)
(74) Representative: Reddie & Grose LLP

(57) **Abstract**

A splice module for a fiber optic network includes a base housing defining a cavity that receives first fibers and intermediate fibers in separate regions that minimize intersections between the fibers. The splice module further includes a cover attached to the base housing and moveable between an opened position, where the cavity is accessible, and a closed position, where the cavity is inaccessible. A splice tray is carried by the cover and includes a splice area that receives spliced connections between the first fibers and the intermediate fibers. With the cover in the opened position, the splice tray is moveable between an opened position, where the splice area is accessible, and a closed position, where the splice area is inaccessible. This arrangement protects the spliced connections from inadvertent damage. A method of connecting optical fibers using the splice module is also disclosed.

## Description

### Priority Application

This application claims the benefit of priority of U.S. Provisional Application No. 63/604,516, filed on November 30, 2023, the content of which is relied upon and incorporated herein by reference in its entirety.

### Technical Field

This disclosure relates generally to fiber optic connectivity in a fiber optic network, and more particularly to a splice module for connecting optical fibers of the network and to a method of connecting optical fibers of the network using such splice modules.

### Background

The large amount of data and other information transmitted over the internet has led businesses and other organizations to develop large scale fiber optic networks for organizing, processing, storing and/or disseminating large amounts of data. Network design and cabling-infrastructure architecture are becoming increasingly large and complex to handle growing industry needs. There are many different network architectures, and the various tasks required to distribute optical signals (e.g., splitting, splicing, routing, connecting subscribers) can occur at several locations. Regardless of whether a location is considered a central office, local convergence point, network access point, subscriber premise, or something else, fiber optic equipment is used to house components that carry out one or more of the tasks. The fiber optic equipment may include fiber distribution hubs (FDH), cabinets, closures, network interface devices, distribution frames, etc. Many types of fiber optic equipment include equipment racks or frames to which components are mounted. Organizing fiber optic cables within this equipment can be a challenge.

A passive optical network (PON), for example, is a type of optical distribution network that is comprised entirely of passive optical components. The continued growth of the internet has resulted in a corresponding increase in demand for network capacity and reliability. This demand has, in turn, caused carriers to extend their PONs closer to end users. This extension of optical fiber toward the ends of the network (e.g., node, curb, building, home, etc.) is commonly referred to as Fiber-To-The-x (FTTx). For example, in one such network configuration, carriers desire to extend their PONs all the way to user workstations within office buildings. This type of extension of carrier PONs may be referred to as Fiber-To-The-Workplace (FTTW) or Fiber-To-The-Desk (FTTD). In another network configuration, carriers desire to extend their PONs all the way to network equipment in the home. This type of extension of carrier PONs may be referred to as Fiber-To-The-Home (FTTH). FTTH in particular has been recognized by governments around the world as an essential digital infrastructure to support economic growth across urban and rural areas. Presently, FTTH reaches less than 50% of homes in the United States. Equipping more homes, offices, workstations, etc. with optical fibers will require innovative and improved management and connectivity of fiber optic cables.

To provide optical connectivity to homes and workplaces, the optical fibers of a main trunk cable are often spliced to optical fibers of drop cables that are coupled to the network equipment in a home or workplace. For this coupling, a splice cabinet may be fixedly positioned relatively close to where a fiber optic cable enters the home or workplace. The splice cabinet holds numerous splice modules, in which the optical connections are made. More particularly, the splice module is configured to provide the physical environment in which optical connections between incoming optical fibers, such as optical fibers from the main trunk cable, and outgoing optical fibers, such as optical fibers from one or more drop cables, are made. Those optical fibers are spliced together in the splice module through, for example, fusion splicing. Fusion splicing is a labor-intensive method for connecting optical fibers that is typically performed under field conditions. Excess fiber length is typically provided to allow for multiple attempts for making a high-quality spliced connection. This makes cable management within the splice module challenging.

In practice, splice cabinets are often accessed by technicians from different carriers, with each having their own approach to cable management. In many cases, technicians work on tight time schedules and cable management is often overlooked. As a result, splice modules often devolve into an entangled mess of crisscrossing optical fibers, with technicians having no ability to track identity and path of select optical fibers. Moreover, because splice modules are repeatedly accessed by a wide range of technicians, it is not uncommon for technicians to unknowingly damage other optical fibers and splices in the splice module, thereby interrupting service to end subscribers. In such circumstances, it can be difficult for technicians to troubleshoot service interruption issues.

These issues are not only present in curbside cabinets adjacent end users, but are also present in central offices, for example, where a large number of splice terminals and other fiber optic components of the fiber optic network are located. Thus, there is a need in the fiber optics industry for a splice module that provides improved organization of the optical fibers associated with the splice module. There is also a need for splice modules that protect the spliced connections so as to reduce the likelihood of unintentional damage due to repeated access by a wide range of different carriers and personnel.

### Summary

In one aspect of the disclosure, a splice module for a fiber optic network is disclosed. The splice module is configured for optically connecting a plurality of first optical fibers of the fiber optic network to a plurality of second optical fibers of the fiber optic network via a plurality of intermediate optical fibers positioned in the splice module. The splice module includes a base housing defining an interior cavity that is configured to receive the plurality of first optical fibers and the plurality of intermediate optical fibers. The base housing generally defines a central axis of the splice module. The splice module further includes a cover attached to the base housing and moveable between an opened position, where the interior cavity is accessible from an exterior of the splice module, and a closed position, where the interior cavity is inaccessible from the exterior of the splice module. A splice tray is attached to the cover and includes a splice area configured to receive spliced connections between the plurality of first optical fibers and the plurality of intermediate optical fibers. When the cover is in the opened position, the splice tray is moveable relative to the cover between an opened position, where the splice area is accessible from the exterior of the splice module, and a closed position, where the splice area is inaccessible from the exterior of the splice module.

In one embodiment, the base housing may include a base wall defining a front edge, a rear edge, a first side edge, and a second side edge, a first side wall extending along at least a portion of the first side edge of the base wall, and a second side wall extending along at least a portion of the second side edge of the base wall. The base wall may further include at least one dividing wall that defines: i) a first fiber region; ii) a second fiber region; and iii) an intermediate fiber region of the interior cavity. Each region may be separated from an adjacent region by the at least one dividing wall. In one embodiment, the plurality of first optical fibers may be configured to be received in one of the first fiber region or the second fiber region, and the plurality of intermediate optical fibers may be configured to be received in the intermediate fiber region. Diving the base housing tin to separate regions and containing the different optical fibers in different regions minimizes intersections between the different optical fibers, thereby providing a more organized arrangement of fibers within the splice module.

In one embodiment, the at least one dividing wall may include a first dividing wall extending from the first side wall and a second dividing wall extending from the second side wall. Each of the first dividing wall and the second dividing wall may be J-shaped, extend from its respective side wall toward the rear edge of the base wall, and terminate adjacent the central axis of the base housing. In one embodiment, the first fiber region may be adjacent to the intermediate fiber region, the second fiber region may be adjacent to the intermediate fiber region, and the first fiber region and the second fiber region may be separated from each other by a portion of the intermediate fiber region. In one embodiment, the portion of the intermediate fiber region between the first fiber region and the second fiber region may define a fiber channel open to the rear edge of the base wall and is configured to receive the plurality of intermediate optical fibers therein.

In one embodiment, the first fiber region may include a portion of the rear edge of the base wall adjacent the first side wall, and the second fiber region may include a portion of the rear edge of the base wall adjacent the second side wall. Moreover, in one embodiment, the first fiber region may include a first fiber inlet and a first strain relief element adjacent the first fiber inlet, and the second fiber region may include a second fiber inlet and a second strain relief element adjacent the second fiber inlet. In one embodiment, the base wall may be symmetric about the central axis. This allows the plurality of first optical fibers to be received in the splice module from either side of the module (e.g., from the right side of the left side of the splice module).

In one embodiment, the cover may be pivotally attached to base housing at the rear edge of the base wall. For example, the rear edge of the base wall may include one of at least one hinge clip or at least one hinge pin for pivotally attaching the cover to the base housing. In one embodiment, the cover may have an L-shaped configuration including a top wall having a front edge, a first side edge, and a second side edge, and a rear wall extending from a rear of the top wall and having a lower edge, a first side edge, and a second side edge. The cover may be pivotally attached to the base housing at the lower edge of the rear wall. For example, the lower edge of the rear wall may include one of at least one hinge clip or at least one hinge pin for pivotally attaching the cover to the base housing.

In one embodiment, the cover may further include a first hinge boss adjacent the first side edge of the rear wall and a second hinge boss adjacent the second side edge of the rear wall. The splice tray may be pivotally attached to the cover at the first hinge boss and the second hinge boss. In one embodiment, the front edge of the top wall of the cover may include a front wall extending therefrom and an outer surface of the front wall may include indicia for facilitating fiber optic connections (e.g., port identification). Additionally, in one embodiment, the cover may include at least one closure element for retaining the splice tray in the closed position relative to the cover. For example, the at least one closure element may include at least one friction pin configured to be received within a corresponding at least one bore in the splice tray when the splice tray is in the closed position. The at least one close element may be selectively released from the splice tray to allow the splice tray to move to the opened position.

In one embodiment, the splice module may include a patch panel including a plurality of adapters. Each of the plurality of adapters may be received in a respective one of a plurality of openings in the patch panel. Additionally, each of the plurality of adapters may include at least one front port configured to receive a fiber optic connector associated with the plurality of second optical fibers and at least one rear port configured to receive a fiber optic connector associated with the plurality of intermediate optical fibers. In one embodiment, the first side wall of the base housing may include a first groove adjacent the front edge of the base wall and the second side wall of the base housing may include a second groove adjacent the front edge of the base wall. Each of the first groove and the second groove may be configured to receive a portion of a patch panel therein to removably attach the patch panel to the splice module.

In one embodiment, the splice module may include the plurality of intermediate optical fibers. For example, the plurality of intermediate optical fibers may include a plurality of intermediate fiber optic connectors and each of the plurality of intermediate fiber optic connectors may be received in a respective one of the at least one rear port of the plurality of adapters in the patch panel. The other end of the plurality of intermediate optical fibers are configured to be spliced to the plurality of first optical fibers in the splice area of the splice tray.

In one embodiment, the splice module may be configured for sliding motion relative to, for example, an equipment rack. In this embodiment, the splice module may include a first slider extending from the rear edge of the base wall adjacent the first side wall and a second slider extending from the rear edge of the base wall adjacent the second side wall. The splice module is configured to be engaged with mounting brackets that may be fixed to the equipment rack and slidable between a retracted position, where the splice module is configured to be located internal to the equipment rack and an extended position, where the splice module is configured to be located external to the equipment rack and accessible.

In another aspect of the disclosure, a rack mount assembly for an equipment rack of a fiber optic network is disclosed. The rack mount assembly includes a first mounting bracket configured to be fixedly or releasably connected to the equipment rack, a second mounting bracket configured to be fixedly connected to the equipment rack, and the splice module according to the aspect described above mounted to the first mounting bracket and the second mounting bracket so as to be moveable relative to the equipment rack between the retracted position and the extended position.

In one embodiment, for example, the splice module may be slidable relative to the equipment rack between the retracted position and the extended position. In an alternative embodiment, the splice module may be pivotable relative to the equipment rack between the retracted position and the extended position. In one embodiment, each of the first mounting bracket and the second mounting bracket may define a mid-plane through the respective brackets, and each of the first mounting bracket and the second mounting bracket may be symmetric about their respective mid-planes. This allows the first mounting bracket and the second mounting bracket to be mounted on either side of the splice module within the equipment rack.

In another aspect of the disclosure, an equipment rack for a fiber optic network is disclosed. In this embodiment, the equipment rack includes a frame for supporting fiber optic equipment and at least one rack mount assembly according to the second aspect described above connected to the frame. In one embodiment, the equipment rack may include a plurality of rack mount assemblies.

In yet a further aspect of the disclosure, a method of connecting optical fibers of a fiber optic network using a splice module is disclosed. The fiber optic network includes a plurality of first optical fibers and a plurality of second optical fibers to be connected by the splice module. The splice module includes a base housing defining an interior cavity, a cover movably attached to the base housing between an opened position and a closed position, and a splice tray attached to the cover and including a splice area. When the cover is in the opened position, the splice tray is moveable relative to the cover between an opened position and a closed position. The base housing further includes a patch panel attached to the base housing and a plurality of intermediate optical fibers extending from the patch panel to the splice area along an intermediate fiber path. The method includes routing the plurality of first optical fibers into the interior cavity of the base housing at a fiber inlet, directing the plurality of first optical fibers from the fiber inlet to the splice area on the splice tray along an incoming fiber path, forming a plurality of spliced connections between the plurality of first optical fibers and the plurality of intermediate optical fibers in the splice area, and connecting a plurality of second optical fibers to the patch panel, thereby optically connecting the first plurality of optical fibers and the second plurality of optical fibers. The incoming fiber path and the intermediate fiber path are configured to minimize or avoid intersecting each other outside of the splice area of the splice module.

In one embodiment, the base housing may include a first side and a second side, and routing the plurality of first optical fibers into the interior cavity of the base housing may further include routing the plurality of first optical fibers into the interior cavity of the base housing through a first fiber inlet on the first side of the base housing or routing the plurality of first optical fibers into the interior cavity of the base housing through a second fiber inlet on the second side of the base housing.

In one embodiment, the interior cavity of the base member may include a first fiber region open to the first fiber inlet, a second fiber region open to the second fiber inlet, and an intermediate fiber region. Each region may be separated from the other regions by one or more dividing walls. Additionally, the intermediate fiber path may extend within the intermediate fiber region and the incoming fiber path may extend within the first fiber region or the second fiber region.

In one embodiment, the intermediate fiber path may extend from the interior cavity to a lower surface of the splice tray at a central region thereof and toward an edge of the splice tray in a first routing direction, and directing the plurality of first optical fibers from the fiber inlet to the splice area on the splice tray along the incoming fiber path may further include directing the plurality of first optical fibers to the lower surface of the splice tray at a central region thereof and toward an edge of the splice tray in a second routing direction opposite to the first routing direction.

In one embodiment, the intermediate fiber path may extend from the lower surface of the splice tray to an upper surface of the splice tray through a first opening in the splice tray and from the first opening to a first side of the splice area, and directing the plurality of first optical fibers from the fiber inlet to the splice area on the splice tray along the incoming fiber path may further include directing the plurality of first optical fibers from the lower surface of the splice tray to the upper surface of the splice tray through a second opening in the splice tray and from the second opening to a second side of the splice area.

Additional features and advantages will be set forth in the detailed description which follows, and in part will be readily apparent to those skilled in the technical field of optical connectivity. It is to be understood that the foregoing general description, the following detailed description, and the accompanying drawings are merely exemplary and intended to provide an overview or framework to understand the nature and character of the claims.

### Brief Description of the Drawings

The accompanying drawings are included to provide a further understanding and are incorporated in and constitute a part of this specification. The drawings illustrate one or more embodiment(s), and together with the description serve to explain principles and operation of the various embodiments. Features and attributes associated with any of the embodiments shown or described may be applied to other embodiments shown, described, or appreciated based on this disclosure.
Fig. 1 is a schematic view illustrating an exemplary FTTx carrier network in which embodiments of the disclosure may be used.
Fig. 2 is a partial perspective view of an equipment rack having a rack mount assembly in accordance with an embodiment of the disclosure.
Fig. 3 is a perspective view of a rack mount assembly for the equipment rack shown in Fig. 2 according to one embodiment of the disclosure.
Fig. 4 is a perspective view of a splice module of the rack mount assembly shown in Fig. 3 in accordance with one embodiment of the disclosure.
Fig. 5 is a disassembled perspective view of the splice module shown in Fig. 4.
Fig. 6 is a perspective view of a base housing of the splice module shown in Fig. 4 in accordance with an embodiment of the disclosure.
Fig. 7 is a perspective view of a cover of the splice module shown in Fig. 4 in accordance with an embodiment of the disclosure.
Fig. 8 is a perspective view of a splice tray of the splice module shown in Fig. 4, showing the upper surface thereof, in accordance with an embodiment of the disclosure.
Fig. 9 is another perspective view of the splice tray of the splice module shown in Fig. 4, showing the lower surface thereof, in accordance with an embodiment of the disclosure.
Fig. 10 is a top view of the splice module shown in Fig. 4 illustrating the fiber path of the various optical fibers in the base housing of the splice module in accordance with an embodiment of the disclosure.
Fig. 11 is another top view of the splice module shown in Fig. 4 illustrating the fiber path of the various optical fibers in the splice tray of the splice module in accordance with an embodiment of the disclosure.
Fig. 12 is a top view of the splice module shown in Fig. 4 illustrating the fiber path of the various optical fibers in the base housing of the splice module in accordance with another embodiment of the disclosure.
Fig. 13 is a bottom view of the splice tray of the splice module shown in Fig. 4 illustrating the fiber path of the various optical fibers in the splice tray in accordance with another embodiment of the disclosure.
Fig. 14 is a perspective view of a rack mount assembly for the equipment rack shown in Fig. 2 according to another embodiment of the disclosure.
Fig. 15 is a perspective view of a splice module of the rack mount assembly shown in Fig. 14 in accordance with another embodiment of the disclosure.
Fig. 16 is a disassembled perspective view of the splice module shown in Fig. 15.
Fig. 17 is a perspective view of a base housing of the splice module shown in Fig. 15 in accordance with another embodiment of the disclosure.
Fig. 18 is a perspective view of a cover of the splice module shown in Fig. 15 in accordance with another embodiment of the disclosure.
Fig. 19 is a perspective view of a splice tray of the splice module shown in Fig. 15, showing the upper surface thereof, in accordance with another embodiment of the disclosure.
Fig. 20 is another perspective view of the splice tray of the splice module shown in Fig. 15, showing the lower surface thereof, in accordance with another embodiment of the disclosure.
Fig. 21 is a top view of the splice module shown in Fig. 15 illustrating the fiber path of the various optical fibers in the base housing of the splice module in accordance with another embodiment of the disclosure.
Fig. 22 is another top view of the splice module shown in Fig. 15 illustrating the fiber path of the various optical fibers in the splice tray of the splice module in accordance with another embodiment of the disclosure.
Fig. 23 is a top view of the splice module shown in Fig. 15 illustrating the fiber path of the various optical fibers in the base housing of the splice module in accordance with another embodiment of the disclosure.
Fig. 24 is a bottom view of the splice tray of the splice module shown in Fig. 15 illustrating the fiber path of the various optical fibers in the splice tray in accordance with another embodiment of the disclosure.

### Detailed Description

Various embodiments will be further clarified by examples in the description below. In general, the description relates to an improved splice module for a splice cabinet of a fiber optic network. The splice module is compartmentalized into regions that maintain different kinds of optical fibers (e.g., incoming optical fibers, outgoing optical fibers, and intermediate optical fibers) associated with the splice module separate from each other. This prevents the different kinds of optical fibers from intersecting or crisscrossing each other, and thereby eliminates or reduces the optical fibers from becoming entangled with each other in a jumbled mess of optical fibers, which is characteristic of many splice modules currently deployed in the field. In addition, the various fibers are configured to extend within the splice module along fiber paths that have no or minimal intersections between their entry into the splice module and the splice area of the module, where different kinds of optical fibers are spliced together. By compartmentalizing the splice module and minimizing intersections between different kinds of optical fibers, organization of the optical fibers within the splice module may be more easily maintained. Moreover, with enhanced organization within the splice module, troubleshooting connectivity issues may also be improved.

In addition to the above, the splice module also provides enhanced protection of the spliced connections made in the splice area of the splice module. In this regard, the splice module includes a cover and a splice tray (which includes the splice area) that is connected to and carried by the cover so as to move with movement of the cover. In this way, the splice area of the splice tray is covered and protected by the cover when technicians or other personnel initially access the interior of the splice module. However, the splice module is movably connected to the cover so that it may be selectively moved from a closed position, where the splice area is protected by the cover and inaccessible to a technician, to an opened position, where the splice area is exposed and accessible by the technician. Thus, accessing the spliced joint in the splice area is through a deliberate act by the technician. Accordingly, when the splice module is being accessed for a reason other than the spliced connections, the spliced connections may remain in a protected state with the cover and unintentional damage to the spliced connections, and the resulting service interruptions to end subscribers, may be avoided.

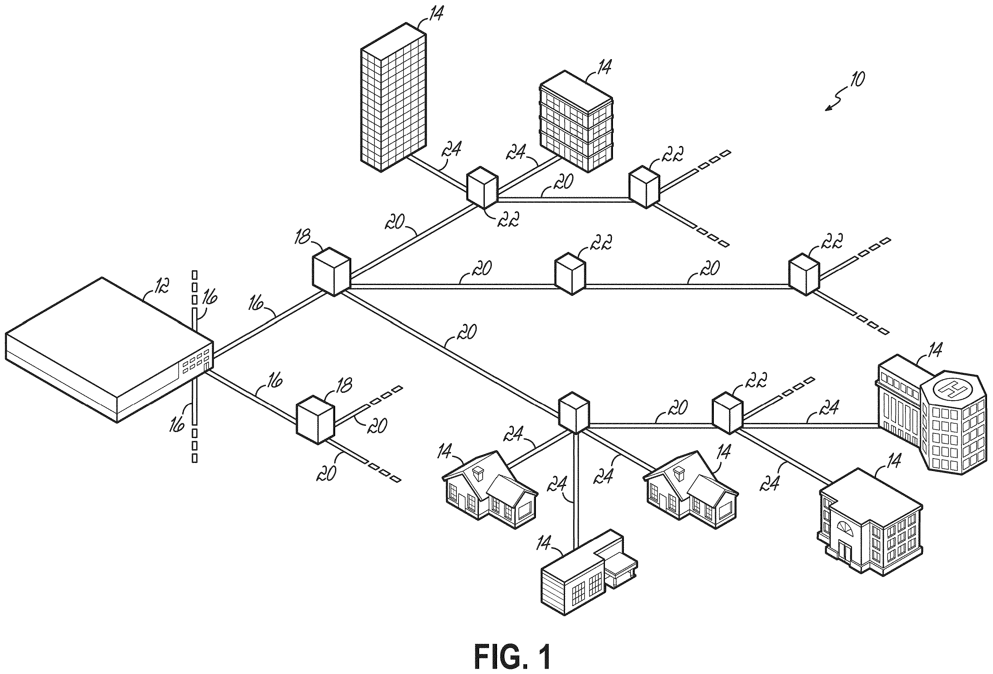

As illustrated in Fig. 1, an exemplary FTTx carrier network 10 distributes optical signals generated at a switching point 12 (e.g., a central office) to one or more subscriber premises 14. Optical line terminals (OLTs - not shown) at the switching point 12 convert electrical signals into optical signals. Fiber optic feeder cables 16 then carry the optical signals to various local convergence points 18. The convergence points 18 act as locations for making cross-connections and interconnections (e.g., by splicing or patching cables). The local convergence points 18 often include splitters or WDM components to enable any given optical fiber in the feeder cable 16 to serve multiple subscriber premises 14. As a result, the optical signals are "branched out" from the optical fibers of the feeder cables 16 to optical fibers of fiber optic distribution cables 20 that exit the local convergence points 18.

At remote network access points 22 closer to the subscriber premises 14, some or all of the optical fibers in the distribution cables 20 may be accessed to connect to one or more subscriber premises 14. Drop cables 24 extend from the network access points 22 to the subscriber premises 14, which may be single-dwelling units (SDU), multi-dwelling units (MDU), businesses, and/or other facilities or buildings. An optical network terminal (ONT - not shown) located at or inside the subscriber premises 14 receives one or more optical signals and converts the optical signals back to electrical signals at the remote distribution points or subscriber premises 14. Equipment racks may be located in any single one or each of the switching points 12, local convergence points 18, and remote network access points 22 in the carrier network 10. While aspects of the disclosure are in the context of a carrier network 10, it should be understood that aspects of the disclosure may be used in other fiber optic network contexts, such as that provided in a data center.

As discussed above, various locations of the fiber optic network 10 may include a plurality of splice modules for making fiber optic connections between one or more first optical fibers and one or more second optical fibers. In one embodiment, the first optical fibers may be incoming optical fibers to the splice module and the second optical fibers may be outgoing optical fibers from the splice module. For example, the incoming optical fibers may be from one or more feeder cables 16 of the fiber optic network 10 and the outgoing optical fibers may be from one or more drop cables 24 of the fiber optic network 10 (e.g., such as that which might be found in a remote access point 22). However, what constitutes the incoming optical fibers and the outgoing optical fibers may depend on the particular context, architecture, location, etc. of the fiber optic network and should not be limited to any particular optical fibers of the network. The terms "incoming optical fibers" and "outgoing optical fibers" are used to differentiate the optical fibers being connected at the splice module. The terms do not limit applications to unidirectional optical signals in a fiber optic network. Indeed, bidirectional optical communications are contemplated to be within the scope of the present disclosure. Regardless of the particular source of the incoming and outgoing optical fibers, these fibers are configured to be optically connected via the splice module. As noted above, this is done in a manner that provides improved management of the various optical fibers in the splice module and in a manner that enhances protection of the optical fibers and spliced connections made therein.

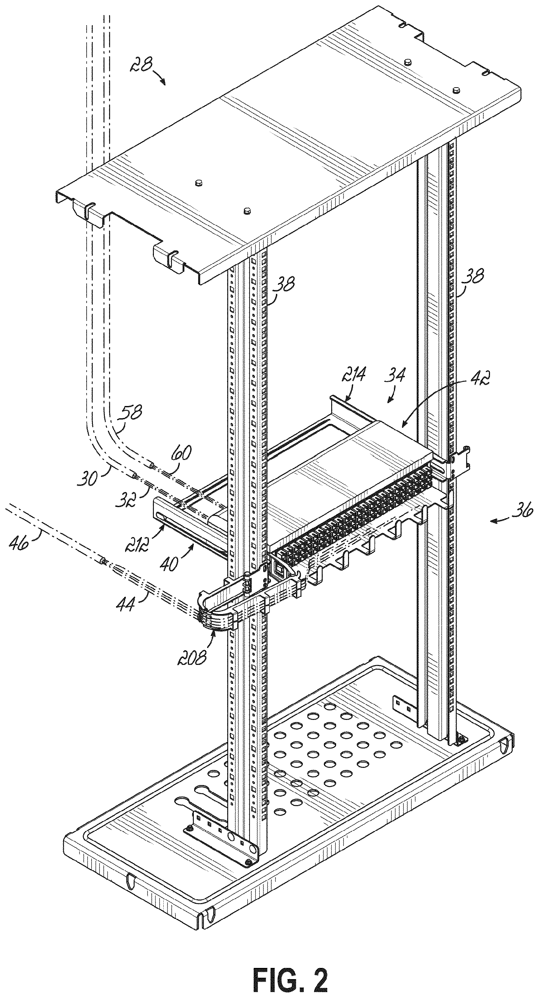

As illustrated in Fig. 2, in an exemplary location in the fiber optic network 10, an equipment rack 28 may receive one or more incoming fiber optic cables 30 carrying a plurality of incoming optical fibers 32, which may be optical fibers from any one of the feeder cables 16, distribution cables 20, or drop cables 24 in Fig. 1. The equipment rack 28 is configured to support one or more rack mount assemblies 34 to which at least a portion of the incoming fiber optic cables 30 may be routed. In that regard, and in the exemplary embodiment, the equipment rack 28 may include a housing 36 for holding network equipment and receives the incoming cables 30 within its interior. Moreover, the equipment rack 28 may include a pair of vertical frame members 38 between which each rack mount assembly 34 may be supported. The vertical frame members 38 generally define a space within the equipment rack 28 for each rack mount assembly 34. While embodiments of the rack mount assembly 34 are not generally limited in dimension, the rack mount assembly 34 may be scalable to meet 19", 21", and 23" or other rack standards. The rack mount assembly 34 is generally installed and removable from a front side of the equipment rack 28. Although only a single rack mount assembly 34 is shown in Fig. 2, additional rack mount assemblies 34 may be mounted to the vertical frame members 38 to populate the entirety of a height of the equipment rack 28 along the vertical frame members 38. Optical fibers 32 from one or more incoming fiber optic cables 30 may then be routed to and terminated within each rack mount assembly 34, as will be described below.

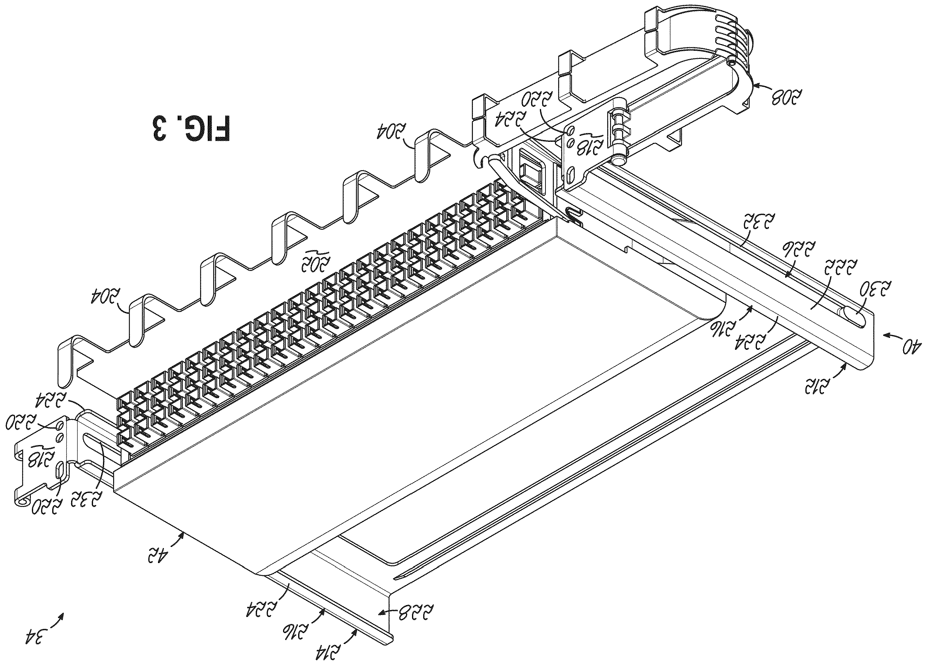

As further illustrated in Figs. 2 and 3, in an exemplary embodiment, the rack mount assembly 34 may include a mounting arrangement 40 configured to be connected to the vertical frame members 38 and one or more splice modules 42 supported by the mounting arrangement 40. In an exemplary embodiment, the mounting arrangement 40 may be configured to receive a single splice module 42 but may include additional splice modules in alternative embodiments (not shown). The splice module 42 is configured to receive the incoming optical fibers 32 from the one or more incoming fiber optic cables 30 and optically connect those incoming optical fibers 32 to outgoing optical fibers 44 from one or more outgoing fiber optic cables 46. Depending on the location within the fiber optic network 10, the outgoing optical fibers 44 may be from any one of the feeder cables 16, distribution cables 20, or drop cables 24 in Fig. 1, for example.

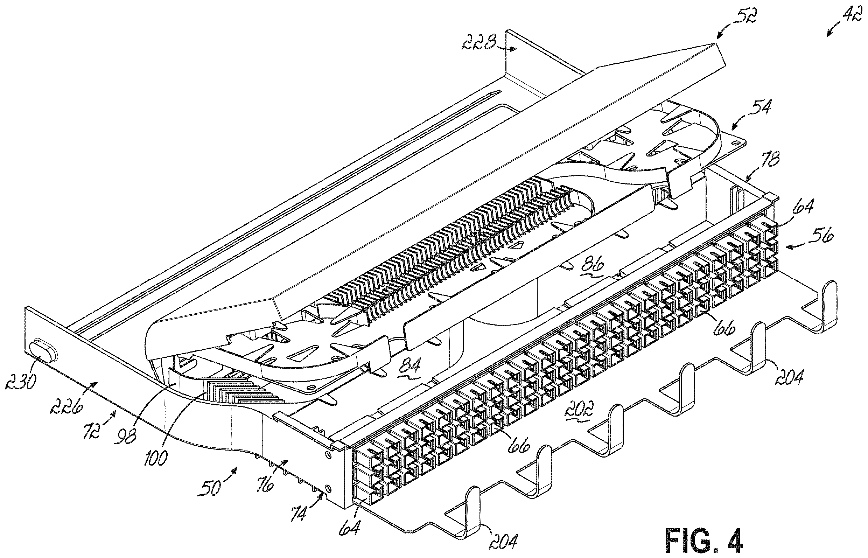

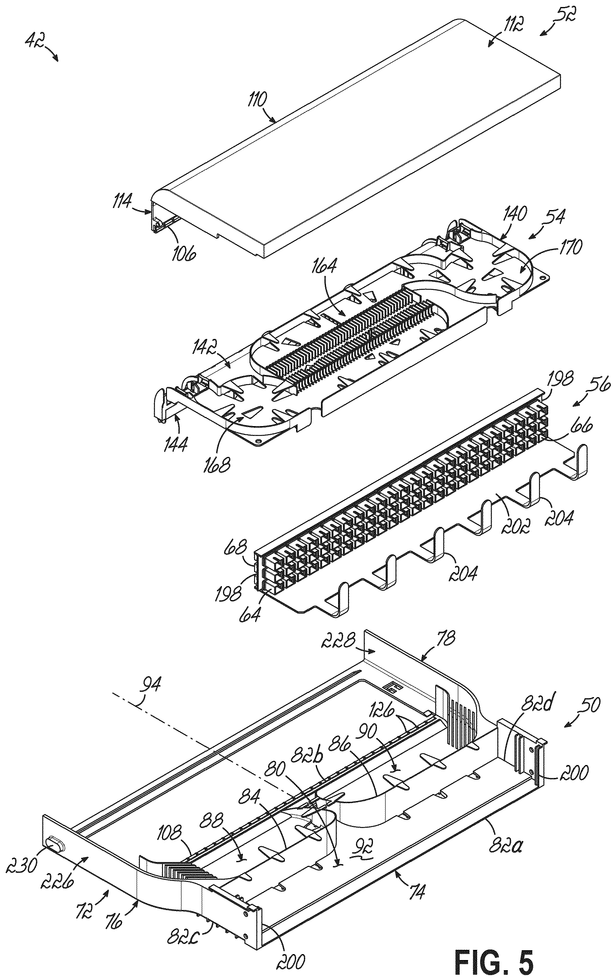

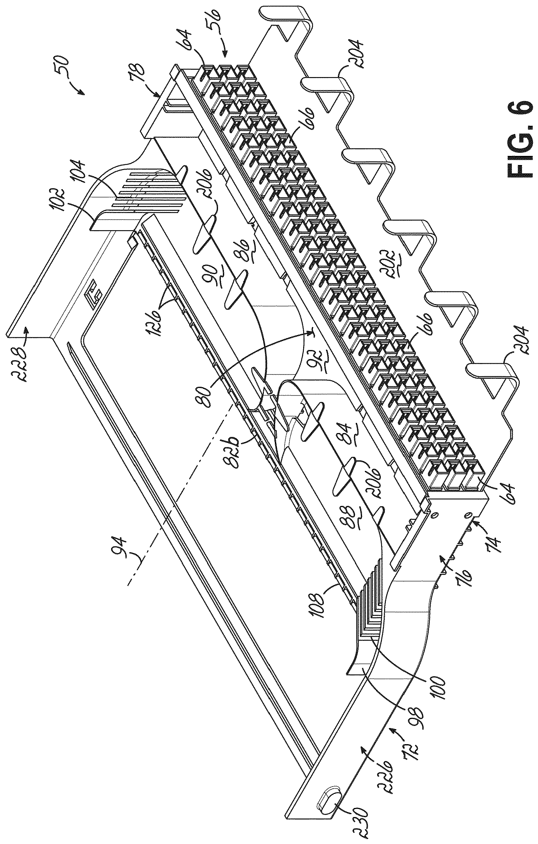

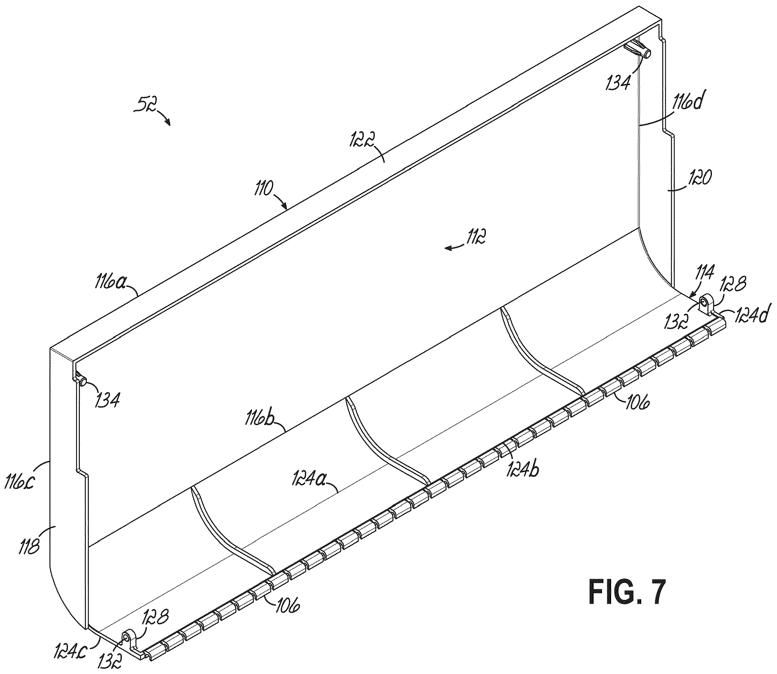

Figs. 4-13 illustrate a splice module 42 in accordance with an embodiment of the disclosure. As illustrated in these figures, the splice module 42 includes a base housing 50, a cover 52 movably connected to the base housing 52, a splice tray 54 positionable within the splice module 42 and at which splices between optical fibers are made and held, and a patch panel 56 connected to the base housing 50. As will be explained in more detail below, the splice module 42 is configured in a way that maintains the different "kinds" of optical fibers associated with the splice module 42 organized and separate from each other. In this regard, the splice module 42 is configured to include and/or interact with, for example, three different kinds of optical fibers. As discussed above, the splice module 42 is configured to receive the incoming optical fibers 32 from the one or more incoming fiber optic cables 30 and optically connect those incoming optical fibers 32 to outgoing optical fibers 44 from one or more outgoing fiber optic cables 46. Those optical connections are configured to be made using a plurality of intermediate fiber optic cables 58 (referred to herein as "pigtail cables 58") that carry a plurality of intermediate optical fibers 60 (referred to herein as "pigtail optical fibers 60"). The pigtail optical fibers 60 are configured to be contained by the splice module 42.

Pigtail fiber optic cables 58 are well known in the fiber optics industry and generally include a relatively short length of fiber optic cable carrying a plurality of optical fibers. One end of the pigtail fiber optic cables 58 is terminated with one of more fiber optic connectors 62. The other end of the pigtail fiber optic cables 58 is unterminated and is configured such that the pigtail optical fibers 60 may make a spliced connection with other optical fibers, such as the incoming optical fibers 32 from the incoming fiber optic cables 30. Those spliced connections between the incoming optical fibers 32 and the pigtail optical fibers 60 are made and held within the splice tray 54 of the splice module 42. The patch panel 56 of the splice module 42 is configured to hold a plurality of adapters 64 that define a plurality of front connector ports 66 and a plurality of rear connector ports 68. The fiber optic connectors 62 of the plurality of pigtail fiber optic cables 58 are configured to be received in respective rear connector ports 68 defined by the plurality of adapters 64 of the patch panel 56. Additionally, the outgoing optical fibers 44 of the outgoing fiber optic cables 46 may be terminated by a plurality of fiber optic connectors 70. The fiber optic connectors 70 of the plurality of outgoing fiber optic cables 44 are configured to be received in respective front connector ports 66 defined by the plurality of adapters 64 of the patch panel 56.

Thus, the splice module 42 is configured to maintain the incoming optical fibers 32, outgoing optical fibers 44, and the pigtail optical fibers 60 organized and separate from each other as these optical fibers are connected together at the splice module 42. The enhanced organization and separation provided by the splice module 42 avoids crisscrossing the optical fibers within the splice module 42, and therefore avoids the entangled mess of optical fibers normally associated with conventional splice modules. The fiber paths of the incoming optical fibers 32, the outgoing optical fibers 44, and the pigtail optical fibers 60, which are configured to eliminate or minimize crisscrossing of the different kinds of optical fibers, as will be described in more detail below relative to the structural elements of the splice module 42.

As illustrated in Figs. 4-6, the base housing 50 of the splice module 42 includes a base body 72 including a base wall 74, a first side wall 76, and a second side wall 78 that collectively generally define an interior cavity 80. The base wall 74 includes a front edge 82a, a rear edge 82b, a first side edge 82c, and a second side edge 82d. The first side wall 76 extends upwardly from the base wall 74 along at least a portion of the first side edge 82c, and the second side wall 78 extends upwardly from the base wall 74 along at least a portion of the second side edge 82d. The interior cavity 80 of the base housing 50 includes at least one dividing wall that defines separate areas or regions of the interior cavity 80. The separation between the regions of the interior cavity 80 of the base housing 50 allows for optical fibers contained in those regions to remain separate from each other, thus providing an organized arrangement of the optical fibers that avoids intersections or crisscrossing of the different kinds of optical fibers.

In one embodiment, as illustrated in these figures, the interior cavity 80 of the base housing 50 includes a first dividing wall 84 and a second dividing wall 86 that collectively define a first incoming fiber region 88, a second incoming fiber region 90, and an intermediate fiber region 92 of the interior cavity 80. In one embodiment, the first dividing wall 84 may extend from the first side wall 76 toward the rear edge 82b along a central portion of the base wall 74. For example, the first dividing wall 84 may be generally J-shaped and terminate adjacent the rear edge 82b of the base wall 74. Additionally, the base housing 50 generally defines a central axis 94 and the first dividing wall 84 may terminate adjacent, but spaced from, the central axis 94 without crossing the central axis 94. Thus, the first incoming fiber region 88 may include a rear side portion of the base wall 74 that includes at least a portion of the first side wall 76 and at least a portion of the rear edge 82b of the base wall 74.

In a similar manner, the second dividing wall 86 may extend from the second side wall 78 toward the rear edge 82b along a central portion of the base wall 74. For example, the second dividing wall 86 may be generally J-shaped and terminate adjacent the rear edge 82b of the base wall 74. Additionally, the second dividing wall 86 may terminate adjacent, but spaced from, the central axis 94 without crossing the central axis 94. Thus, the second incoming fiber region 90 may include a rear side portion of the base wall 74 that includes at least a portion of the second side wall 78 and at least a portion of the rear edge 82b of the base wall 74. In one embodiment, and as illustrated in Figs. 4-6, the dividing walls 84, 86 of the base housing 50 may be arranged to define the various regions of the interior cavity 80 so as to be generally symmetric about the central axis 94. Such a symmetric arrangement, however, is merely exemplary and non-symmetric arrangements of the dividing walls 84, 86 may also possible.

As further illustrated in Figs. 4-6, the first and second dividing walls 84, 86 may also define the intermediate fiber region 92. In one embodiment, for example, the intermediate fiber region 92 may include a front portion 96a and a channel portion 96b of the base wall 74. The front portion 96a of the intermediate fiber region 92 may be adjacent the front edge 82a of the base wall 74 and may extend across substantially the entire width of the base wall 74. Additionally, the channel portion 96b of the intermediate fiber region 92 may be in communication with the front portion 96a and extend between the two dividing walls 84, 86 so as to be open to the rear edge 82b of the base wall 74. As illustrated in these figures, the channel portion 96b may extend generally along the central axis 94 of the base wall 74. In this arrangement of the various regions of the base housing 50 described above, the first incoming fiber region 88 is adjacent to the intermediate fiber region 92, the second incoming fiber region 90 is adjacent to the intermediate fiber region 92, and the first incoming fiber region 88 is spaced from the second incoming fiber region 90. Moreover, the intermediate fiber region 92 may be arranged to maintain the symmetry of the base housing 50 about the central axis 94.

As explained in more detail below, the incoming optical fibers 32 may be configured to be received in the splice module 42 at one of the first incoming fiber region 88 of the base housing 50 or the second incoming fiber region 90 of the base housing 50. In this regard, depending on the routing architecture of the fiber optic network, the incoming optical fibers 32 may be arranged on either the right side of the splice module 42 or the left side of the splice module 42, and the splice module 42 may be configured to accommodate either arrangement of the incoming optical fibers 32. More particularly, the symmetry of the base housing 50 may allow either arrangement of the incoming optical fibers 32 (e.g., incoming from the right side or left side) to be handled in a similar manner relative to the splice module 42. Accordingly, the first incoming fiber region 88 may include a first fiber inlet 98 to allow the incoming optical fibers 32 to enter the splice module 42 from, for example, the left side. In one embodiment, the first fiber inlet 98 may be adjacent the rear edge 82b of the base wall 74 and the first side wall 76 of the base housing 50. The first fiber inlet 98 may be in communication with the first incoming fiber region 88 so that the incoming optical fibers 32 (e.g., when coming from the left side of the splice module 42) may be initially contained within the first incoming fiber region 88. Additionally, the base wall 74 may include a first strain relief element 100 adjacent the first fiber inlet 98 to relieve any strain placed on the incoming optical fibers 32 from transferring into the splice module 42. In one embodiment, for example, the first strain relief element 100 may include a plurality of strain plates spaced along the first fiber inlet 98. The first strain relief element 100 may, however, take other forms to relieve the strain on the incoming optical fibers 32.

In a similar manner, the second incoming fiber region 90 may include a second fiber inlet 102 to allow the incoming optical fibers 32 to enter the splice module 42 at the second incoming fiber region 90 from the right side. In one embodiment, the second fiber inlet 102 may be adjacent the rear edge 82b of the base wall 74 and the second side wall 78 of the base housing 50. The second fiber inlet 102 may be in communication with the second incoming fiber region 90 so that the incoming optical fibers 32 (e.g., when coming from the right side of the splice module 42) may be initially contained within the second incoming fiber region 90. Additionally, the base wall 74 may include a second strain relief element 104 adjacent the second fiber inlet 102 to relieve any strain placed on the incoming optical fibers 32 from transferring into the splice module 42. In one embodiment, for example, the second strain relief element 104 may include a plurality of strain plates spaced along the second fiber inlet 102. The second strain relief element 104 may, however take other forms to relieve the strain on the incoming optical fibers 32. In an exemplary embodiment, the arrangement of the fiber inlets 98, 102 and the strain relief elements 100, 104 may be configured to maintain the symmetry of the base housing 50 about the central axis 94. Non-symmetric configurations may be possible in alternative embodiments, however.

In an exemplary embodiment, the cover 52 is movably attached to the base housing 50 and is moveable between an opened position, where the interior cavity 80 of the base housing 50 is accessible by a technician or the like, and a closed position, where the interior cavity 80 is generally enclosed and inaccessible by the technician. In one embodiment, the cover 52 may be pivotally coupled to the base housing 50 between the opened and closed positions. For example, the cover 52 may include at least one of a hinge clip 106 or a hinge pin 108 and the base housing 50, and more particularly the rear edge 82b of the base wall 74, may include the other of at least one of the hinge clip 106 or the hinge pin 108 to provide pivotal movement of the cover 52 relative to the base housing 50. Pivotal movement is merely exemplary and other moveable arrangements of the cover 52 relative to the base housing 50 may be possible in alternative embodiments.

In an exemplary embodiment, the cover 52 may include an L-shaped body 110 having a top wall 112 and a rear wall 114 extending from the top wall 112 to form the L-shaped body 110. The top wall 112 may include a front edge 116a, a rear edge 116b, a first side edge 116c, and a second side edge 116d opposite the first side edge 116c. The rear wall 114 generally extends from the rear edge 116b of the top wall 112 to form the L-shaped body 110. In one embodiment, the transition from the rear edge 116b of the top wall 112 to the rear wall 114 may be generally arcuate. In an alternative embodiment, however, the transition from the top wall 112 to the rear wall 114 may be generally sharp. In an exemplary embodiment, the rear wall 114 may extend from the top wall 112 in a substantially perpendicular manner, such as 90°± 15°. Other values about 90° may be possible, however. In one embodiment, the cover 52 may further include a first side wall 118 extending from the first side edge 116c of the top wall 112, a second side wall 120 extending from the second side edge 116d of the top wall 112, and a front wall 122 extending from the front edge 116a of the top wall 112. In an exemplary embodiment, each of these walls 118, 120, 122 may extend from the top wall 112 in a substantially perpendicular manner, such as 90°± 15°. Other values about 90° may be possible, however, in alternative embodiments. Additionally, the front wall 122, such as the forward-facing surface of the front wall 122, may include indicia (e.g., letters, numbers, symbols, etc.) to aid a technician or other installer in making fiber optic connections in, for example, the front connector ports 66 of the patch panel 56. The indicia may, for example, provide port identification and/or location in the patch panel 56.

In the embodiment shown in the figures, a lower edge 124b of the rear wall 114 is configured to be pivotally connected to the base housing 50, and more particularly to the rear edge 82b of the base wall 74 of the base housing 50. In this embodiment, for example, the lower edge 124b of the rear wall 114 of the cover 52 may include a plurality of spaced-apart hinge clips 106, and the rear edge 82b of the base wall 74 of the base housing 50 may include a plurality of hinge eyelets 126 that receive at least one hinge pin 108 therethrough. When the cover 52 is connected to the base housing 50, the hinge eyelets 126 are received in the space between adjacent hinge clips 106 and the at least one hinge pin 108 is received in the hinge clips 106 (e.g. in a snap-fit manner) to provide the pivotal connection therebetween. As noted above, in an alternative embodiment, the hinge clips 106 may be associated with the base housing 50 and the hinge eyelets 124 and the at least one hinge pin 108 may be associated with the cover 52. It should also be appreciated that the pivotal movement of the cover 52 relative to the base housing 50 may be provided by other hinge or pivot elements and aspects of the disclosure should not be limited to the particular hinge connection shown and described herein.

As will be explained in more detail below, in one aspect of the disclosure, the splice tray 54 is configured to be carried by the cover 52 of the splice module 42. In other words, the splice tray 54 is connected to the cover 52 and generally moves with movement of the cover 52 between its opened and closed positions relative to the base housing 50. However, the splice tray 54 may be movably connected to the cover 52 such that the splice tray 54, in addition to being carried by the cover 52, may independently move between its own opened position and closed position relative to the cover 52. In this regard, for example, the splice tray 54 may be pivotally coupled to the cover 52 and moved relative to the cover 52 between the opened and closed positions. For example, the cover 52 may include at least one of a hinge boss 128 or a hinge pin 130 and the splice tray 54 may include the other of the at lease one hinge boss 128 or hinge pin 130 to provide pivotal movement of the splice tray 54 relative to the cover 52. Pivotal movement is merely exemplary and other moveable arrangements of the splice tray 54 relative to the cover 52 may be possible in alternative embodiments.

To facilitate these features of the splice tray 54 relative to the cover 52, in one embodiment, the cover 52, and more particularly the rear wall 114 of the cover 52, may include a plurality of hinge bosses 128. For example, in an exemplary embodiment, the rear wall 114 of the cover 52 may include a first hinge boss 128 adjacent a first side edge 124c of the rear wall 114 and a second hinge boss 128 adjacent a second side edge 124d of the rear wall 114. The first and second hinge bosses 128 may also be adjacent the lower edge 124b of the rear wall 114. Other arrangements of the hinge bosses 128 on the rear wall 114 of the cover 52 may, however, be possible in alternative embodiments. Each of the hinge bosses 128 may include a bore 132, such as a through bore or a blind bore, for receiving a respective hinge pin 130 of the splice tray 54, and thereby pivotally connect the splice tray 54 to the cover 52.

Furthermore, the cover 52 may include at least one closure element 134 configured to releasably retain the splice tray 54 in its closed position relative to the cover 52. In other words, the closure element 134 is configured to retain the splice tray 54 in its closed position relative to cover 52 until it is desired to access the splice tray 54, at which time the closure element 134 may be released or overcome such as to permit the splice tray 54 to move to its opened position. By way of example, and without limitation, in one embodiment, the closure element 134 may include a friction pin configured to frictionally engage the splice tray 54 to retain the splice tray 54 in its closed position. The friction pin may, for example, include a central post with wedge-shaped splines about its circumference. The engagement of the friction pin with the splice tray 54 may, however, be overcome manually, such as by a technician, to move the splice tray 54 to its opened position thereby allowing access to the splice tray 54, as will be explained in more detail below. It should be recognized that the closure element 134 may take forms other than friction pins and aspects of the disclosure should not be limited to such an embodiment.

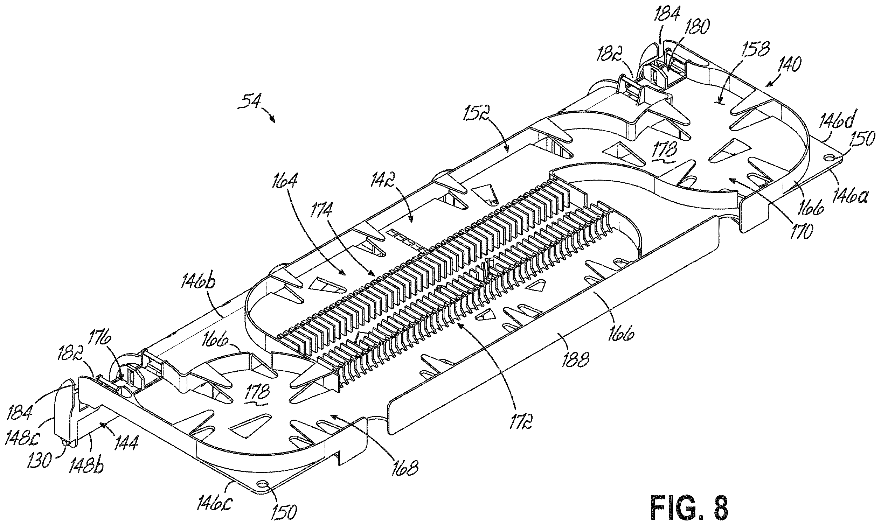

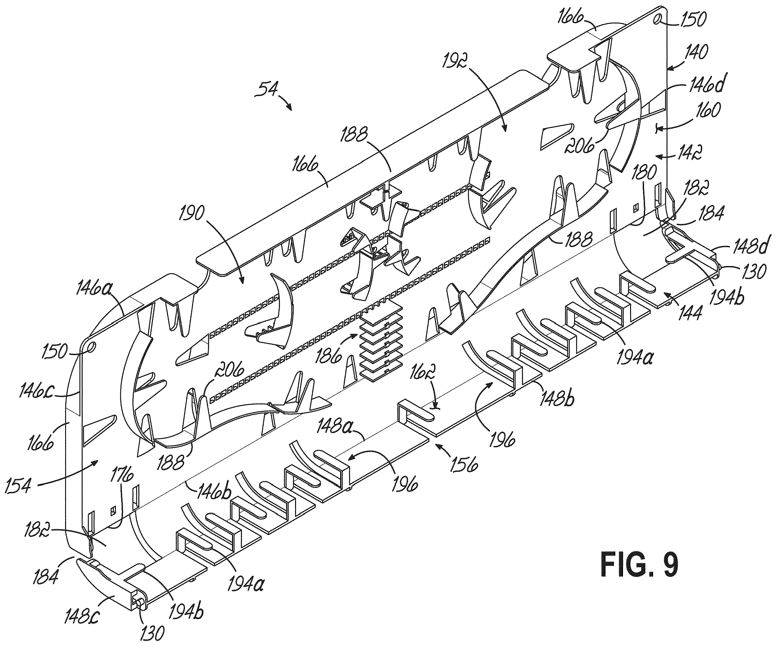

In an exemplary embodiment, and as best illustrated in Figs. 8 and 9, the splice tray 54 may include an L-shaped body 140 having a top wall 142 and a rear wall 144 extending from the top wall 142 to form the L-shaped body 140. The top wall 142 may include a front edge 146a, a rear edge 146b, a first side edge 146c, and a second side edge 146d opposite the first side edge 146c. The rear wall 144 generally extends from the rear edge 146b of the top wall 142 to form the L-shaped body 140. In one embodiment, the transition from the rear edge 146b to the top wall 142 to the rear wall 144 may be generally arcuate. In an alternative embodiment, however, the transition from the top wall 142 to the rear wall 144 may be generally sharp. In an exemplary embodiment, the rear wall 144 may extend from the top wall 112 in a substantially perpendicular manner, such as 90°± 15°. Other values about 90° may be possible, however, in an alternative embodiment.

In the embodiment shown in the figures, the rear wall 144 is configured to be pivotally connected to the cover 52 adjacent the lower edge 124b of the rear wall 114 of the cover 52. In this embodiment, for example, the lower edge 124b of the rear wall 114 of the cover 52 may include a plurality of spaced-apart hinge bosses 128, and the rear wall 144 of the splice tray 54 may include a plurality of hinge pins 130 configured to be received in the hinge bosses 128. In an exemplary embodiment, the splice tray 54, and more particularly the rear wall 144 of the splice tray 54, may include the plurality of hinge pins 130. For example, in an exemplary embodiment, the rear wall 144 of the splice tray 54 may include a first hinge pin 130 adjacent a first side edge 148c of the rear wall 144 and a second hinge pin 130 adjacent a second side edge 148d of the rear wall 144. The first and second hinge pins 130 may also be adjacent the lower edge 148b of the rear wall 144. Other arrangements of the hinge pins 130 on the rear wall 144 of the splice tray 54 may, however, be possible in alternative embodiments. When the splice tray 54 is connected to the cover 52, the hinge pins 130 are received in the bores 132 of the hinge bosses 128 to provide the pivotal connection therebetween. As noted above, in an alternative embodiment, the hinge bosses 128 may be associated with the splice tray 54 and the hinge pins 130 may be associated with the cover 52. It should also be appreciated that the pivotal movement of the splice tray 54 relative to the cover 52 may be provided by other hinge or pivot elements and aspects of the disclosure should not be limited to the particular hinge connection shown and described herein.

As noted above, the splice tray 54 may be pivotable relative to the cover 52 between an opened position and a closed position. To retain the splice tray 54 in the closed position relative to the cover 52, the splice tray 54 may include at least one closure receiver 150 configured to receive the closure element 134 of the cover 52 to retain the splice tray 54 in its closed position relative to the cover 52. In other words, the closure receiver 150, in cooperation with the closure element 134, is configured to retain the splice tray 54 in its closed position relative to cover 52 until it is desired to access certain portions of the splice tray 54. When it is desired to access certain portions of the splice tray 54, the closure element 134 may be released from the closure receiver 150, such as to permit the splice tray 54 to move to its opened position. By way of example, and without limitation, in one embodiment, the closure receiver 150 may include a bore configured to frictionally engage the closure element 134 of the cover 52 to retain the splice tray 54 in its closed position. The bore may, for example, include a through bore or a blind bore in the splice tray 54. The engagement of the closure element 132 (e.g., the friction pin) with the bore may be overcome manually, such as by a technician, to move the splice tray 54 to its opened position thereby allowing access to desired portions of the splice tray 54, as will be explained in more detail below. It should be recognized that the closure receiver 150 may take forms other than a bore and aspects of the disclosure should not be limited to such an embodiment.

As best illustrated in Figs. 8 and 9, the splice tray 54 may include a splice section 152, a splitter section 154, and a guide section 156. In one embodiment, for example, the splice section 152 may be located on an upper surface 158 of the top wall 142 of the splice tray 54, the splitter section 154 may be located on a lower surface 160 of the top wall 142 of the splice tray 54, and the guide section 156 may be located on the inner surface 162 of the rear wall 144 of the splice tray 54. In one embodiment, the splice section 152 may include a splice area 164 and a plurality of dividing walls 166 that define a first splice fiber region 168 and a second splice fiber region 170. The splice area 164 is where the splices between in incoming optical fibers 32 and the pigtail optical fibers 60 are made. In this regard, the splice area 164 includes a first inlet array 172 defining a plurality of splice channels and a second inlet array 174 confronting the first inlet array 174 and also defining a plurality of splice channels that generally align with the plurality of splice channels in the first inlet array 172.

The first inlet array 172 is open to and in communication with the first splice fiber region 168 and the second inlet array 174 is open to and in communication with the second splice fiber region 170. Depending on the arrangement of the incoming optical fiber 32 relative to the splice module 42, the first splice fiber region 168 may be configured to receive either the incoming optical fibers 32 or the pigtail optical fibers 60, and the second splice fiber region 170 may be configured to receive the other of the incoming optical fibers 32 or the pigtail optical fibers 60. In either case, the respective optical fibers are configured to be received in the first inlet array 172 or the second inlet array 174 and spliced in the splice area 164 of the splice section 152 to the pigtail optical fibers 60. For example, the incoming optical fibers 32 and the pigtail optical fibers 60 may be fusion spliced in the splice area 164.

In one embodiment, the dividing walls 166 in the splice section 152 may be arranged such that the first splice fiber region 168 and the second splice fiber region 170 are separate from each other. In this way, for example, the optical fibers in the first splice fiber region 168 (e.g., the incoming optical fibers 32 or the pigtail optical fibers 60) and the optical fibers in the second splice fiber region 170 (e.g., the other of the incoming optical fibers 32 or the pigtail optical fibers 60) do not intersect or otherwise crisscross each other in the splice section 152. For example, in an exemplary embodiment, the only intersection between the incoming optical fibers 32 and the pigtail optical fibers 60 in at least the splice section 152, and preferably in the splice module 42 generally, may be at the spliced connection in the splice area 164.

In an exemplary embodiment, the first splice fiber region 168 may include a first region inlet 176 adjacent to the rear edge 146b and first side edge 146c of the top wall 142 that is configured to receive either the incoming optical fibers 32 or the pigtail optical fibers 60. The first splice fiber region 168 may further include an excess fiber storage portion 178 in communication with first region inlet 176 and the first inlet array 172. In a similar manner, the second splice fiber region 170 may include a second region inlet 180 adjacent to the rear edge 146b and first side edge 146d of the top wall 142 that is configured to receive either the incoming optical fibers 32 or the pigtail optical fibers 60. The second splice fiber region 170 may also include an excess fiber storage portion 178 in communication with the second region inlet 180 and the second inlet array 174.

In one embodiment, each of the first region inlet 176 and the second region inlet 178 may include an opening 182 in the top wall 142 of the splice tray 54. As will be explained in more detail below, the openings 182 in the top wall 142 allow optical fibers 32, 60 to extend from the base housing 50 and/or the lower surface 160 of the top wall 142 to the upper surface 158 of the top wall 142 as part of the fiber path to the splice area 164 of the splice tray 54. To facilitate insertion of the optical fibers 32, 60 through the openings 182, the splice tray 54 may include slots 184 that are open to the external environment and that also communicate with the openings 182 in the splice tray 54. The slots 184 allow the optical fibers 32, 60 to be routed along their respective fiber paths in a simplified manner. Namely, should the openings be fully closed about their perimeters, then the ends of the optical fibers 32, 60 would have to be threaded through the openings 182 in the top wall 142 (e.g., much like inserting a fiber filament through the eye of a needle). However, providing slots 184 in communication with the openings 182 allows the optical fibers 32, 60 to be more easily inserted through the openings 182, and thereby route the optical fibers 32, 60 from the base housing 50 and/or the lower surface 160 to the upper surface 158 of the top wall 142 of the splice tray 54 in an improved manner. In one embodiment, the slots 184 may be located adjacent the rear edge 146b of the top wall 142 and/or the upper edge 148a of the rear wall 144. Other locations of the openings 182 and the slots 184 may be possible in alternative embodiments.

Turning to the splitter section 154, this section optionally allows optical signals in the incoming optical fibers 32 to be split prior to being optically connected to the pigtail optical fibers 60 in the splicing section 152 of the splice tray 54. Optical splitting is well known and a further description will not be provided herein for sake of brevity. In one embodiment, as best illustrated in Fig. 9, the splitter section 154 may include a splitter area 186 and a plurality of dividing walls 188 that define a first splitter fiber region 190 and a second splitter fiber region 192. The splitter area 186 is where the optical splitters (not shown) are held to split an incoming optical signal into a plurality of outgoing optical signals. A first side of the splitter area 186 is open to the first splitter fiber region 190 and a second side of the splitter area 186 is open to the second splitter fiber region 192. The first splitter fiber region 190 and the second splitter fiber region 192 are separate from each other and are configured to maintain the optical fibers positioned therein separate, thereby eliminating or minimizing crisscrossing the optical fibers. Depending on the arrangement of the incoming fiber optical fibers 32 relative to the splice module 42, the first splitter fiber region 190 may be configured to receive either the incoming optical fibers 32 or the split optical fibers on the output side of the optical splitters, and the second splitter fiber region 192 may be configured to receive the other of the incoming optical fibers 32 or the split optical fibers on the output side of the optical splitters. For purposes of the present disclosure, both the original incoming optical fibers 32 and the split optical fibers on the output side of the optical splitters will be referred to herein as the incoming optical fibers 32, as both carry the incoming optical signals prior to the splice area 164 of the splice section 152.

Turning to the guide section 156, this section is configured to control and guide the routing of the incoming optical fibers 32 and the pigtail optical fibers 60 from the base housing 50 toward the splice area 164 of the splice tray 54 in an organized manner. In one embodiment, for example, the guide section 156 may include a plurality of guide fingers 194a positioned between a central region of the rear wall 144 and the side edges 148c, 148d of the rear wall 144. In one embodiment, the guide fingers 194a may be generally L-shaped and extend upwardly from the inner surface 162 of the rear wall 144. Additionally, the guide fingers 194 may have alternating directions to generally define fiber channels 196 extending from the central region of the rear wall 144 toward the side edges 148c, 148d of the rear wall 144. The edges 148c, 148d of the rear wall 144 may also include guide fingers 194b to facilitate controlling and guiding the incoming optical fibers 32 and the pigtail optical fibers 60 as the optical fibers are routed toward the splice area 164.

As discussed above, the patch panel 56 of the splice module 42 is configured to hold a plurality of adapters 64 that define a plurality of front connector ports 66 and a plurality of rear connector ports 68. The fiber optic connectors 62 of the plurality of pigtail fiber optic cables 58 are configured to be received in respective rear connector ports 68 defined by the plurality of adapters 64 of the patch panel 56. The fiber optic connectors 70 of the plurality of outgoing fiber optic cables 46 are configured to be received in respective front connector ports 66 defined by the plurality of adapters 64 of the patch panel 56. Thus, optical connections between the pigtail optical fibers 60 and the outgoing optical fibers 44 may be made at the patch panel 56. In one embodiment, the patch panel 56 may be configured to be removably connected to the base housing 50. For example, the patch panel 56 may be configured to be removably connected to the base housing 50 adjacent the front edge 82a of the base wall 74 of the base housing 50. This arrangement provides easy access to the patch panel 56 by technicians, installers, or the like.

By way of example, and without limitation, to provide the removable connection between the patch panel 56 and the base housing 50, the patch panel 56 may include a slide tab 198 adjacent at least one and preferably each of the sides of the patch panel 56. Moreover, at least one and preferably each of the side walls 76, 78 of the base housing 50 may include a tab groove 200 configured to receive a respective slide tab 198 on the patch panel 56. The tab grooves 200 are open along their top ends such that the patch panel 56 may be moved downwardly to engage the slide tabs 198 within the tab grooves 200 and position the patch panel 56 adjacent the front edge 82a of the base wall 74 of the base housing 50. In one embodiment, the patch panel 56 may further include a fiber platform 202 extending outwardly from the front of the patch panel 56 to support the outgoing optical fibers 44 and their connections to the front connector ports 66 in the patch panel 56. In one embodiment, the fiber platform 202 may extend from a lower edge of the patch panel 56. Moreover, in one embodiment, the patch panel 56 may include guide fingers 204, such as L-shaped guide fingers, at the front end of the fiber platform 202 to control and guide the outgoing optical fibers 44. In an alternative embodiment, the fiber platform 202 and guide fingers 204 may be omitted.

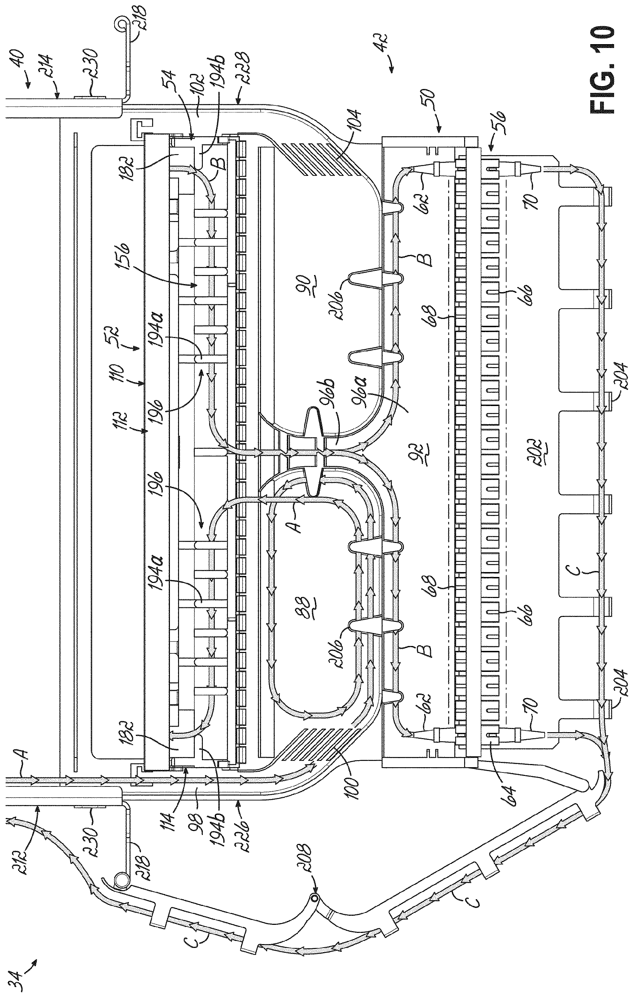

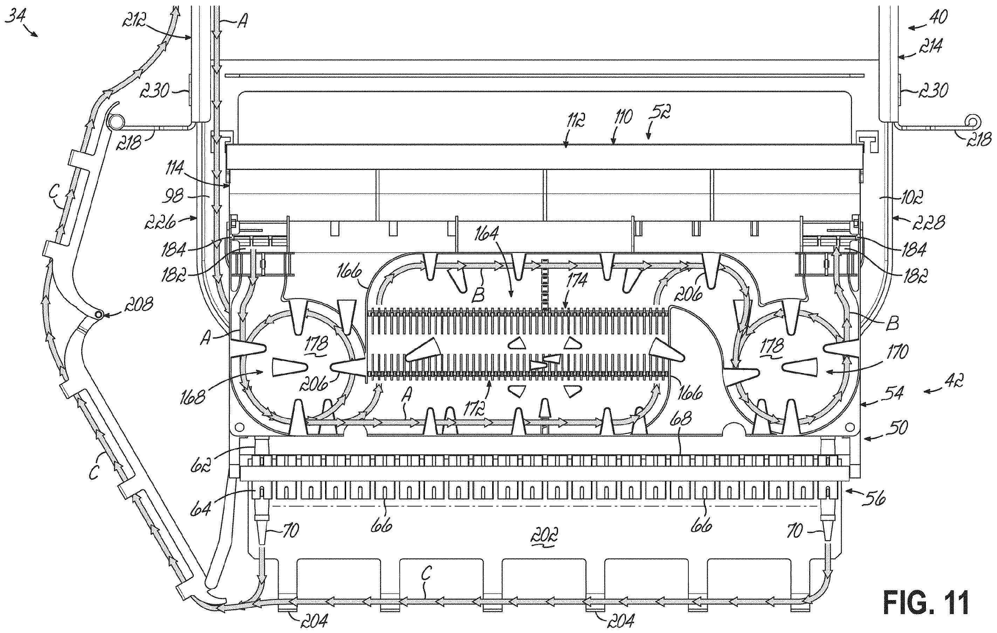

With the structure of the splice module 42 fully described above, the various fiber paths in or about the splice module 42 will now be described. In this regard, and as illustrated in Figs. 10 and 11, the incoming optical fibers 32 may be routed along one side of the splice module 42 from the rear of the splice module 30. The embodiment shown in Fig. 10 illustrates the incoming optical fibers 32 being routed toward the splice module 42 from the left side of the splice module 42 (e.g., when viewed from the front of the splice module 42). In an alternative embodiment, and as discussed below, the incoming optical fibers 32 may be routed to the splice module 42 from the left side of the splice module 42. In these figures, the incoming optical fibers 32 are routed along a fiber path indicated by arrow A. The incoming optical fibers 32 enter the splice module 42 at the first fiber inlet 98 and are initially contained in the first incoming fiber region 88. For example, the incoming optical fibers 32 may be arranged in a coil in the first incoming fiber region 88. To control and guide the incoming optical fibers 32 when in the first incoming fiber region 88, the base housing 50 may include one or more guide tabs 206 distributed about the first incoming fiber region 88.

In the embodiment shown in Fig. 10, the incoming optical fibers 32 may bypass the splitter section 154 of the splice tray 54 and instead be directed toward the splice area 164 without the incoming optical signal being split. In this regard, the incoming optical fibers 32 exit the first incoming fiber region 88 adjacent the central axis 94 of the base housing 50 and adjacent to rear edge 82b of the base wall 74 and enter the guide section 156 of the splice tray 56 along a central region thereof. The incoming optical fibers 32 are then directed to the left and routed through the fiber channel 196 defined by the plurality of guide fingers 194 on the left side of the guide section 156. When the incoming optical fibers 32 reach the first side edges 146c, 148c of the top wall 142 and rear wall 144, respectively, the incoming optical fibers 32 may be inserted into the opening 182 on that side of the splice tray 54 via the slot 184. The incoming optical fibers 32 may then extend through the opening 182 and onto the upper surface 158 of the splice tray 54.

As shown in Fig. 11, once onto the upper surface 158 of the splice tray 54, the incoming optical fibers 32 may then be routed from the opening 184 on the left side of the splice tray 54 and into the first splice fiber region 168 of the splice section 156. The incoming optical fibers 32 may be initially contained in the first splice fiber region 168 and may be arranged in a coil in the excess fiber area 178. To control and guide the incoming optical fibers 32 when in the first splice fiber region 168, the splice tray 54 may include one or more guide tabs 206 distributed about the first splice fiber region 168. From the excess fiber area 178, the incoming optical fibers 32 may be routed to the first inlet array 172 of the splice area 164, where the incoming optical fibers 32 may be spliced to the pigtail optical fibers 60.

With reference again to Fig. 10, the pigtail optical fibers 60 may be terminated by fiber optic connectors 62 which are received in the rear connector ports 68 defined by the adapters 64 of the patch panel 56. The pigtail optical fibers 60 may be routed from the patch panel 56, into the intermediate fiber region 92 of the base housing, and through the fiber channel portion 96b along the central axis 94 toward the rear edge 82b of the base wall 74. The pigtail optical fibers 60 are routed along a fiber path indicated by arrow B in these figures. The pigtail optical fibers 60 may be initially contained in the intermediate fiber region 92 and the base housing 50 may include one or more guide tabs 206 to facilitate controlling and guiding the pigtail optical fibers 60 within the intermediate pigtail fiber region 92.

In the embodiment shown in Fig. 10, the pigtail optical fibers 60 exit the intermediate fiber region 92 adjacent the central axis 94 of the base housing 50 and adjacent to rear edge 82b of the base wall 74 and enter the guide section 156 of the splice tray 56 along a central region thereof. The pigtail optical fibers 60 are then directed to the right and routed through the fiber channel 196 defined by the plurality of guide fingers 194 on the right side of the guide section 156. When the pigtail optical fibers 60 reach the second side edges 146d, 148d of the top wall 142 and rear wall 144, respectively, the pigtail optical fibers 60 may be inserted into the opening 182 on that side of the splice tray 54 via the slot 184. The pigtail optical fibers 60 may then extend through the opening 182 and onto the upper surface 158 of the splice tray 54.

As shown in Fig. 11, once onto the upper surface 158 of the splice tray 54, the pigtail optical fibers 60 may then be routed from the opening 184 on the right side of the splice tray 54 and into the second splice fiber region 170 of the splice section 156. The pigtail optical fibers 60 may be initially contained in the second splice fiber region 170 and may be arranged in a coil in the excess fiber area 178. To control and guide the pigtail optical fibers 60 when in the second splice fiber region 170, the splice tray 54 may include one or more guide tabs 206 distributed about the second splice fiber region 170. From the excess fiber area 178, the pigtail optical fibers 60 may be routed to the second inlet array 174 of the splice area 164, where the pigtail optical fibers 60 may be spliced to the incoming optical fibers 32. Indeed, once the incoming optical fibers 32 and the pigtail optical fibers 60 have been routed to the splice area 164, the ends of the optical fibers 32, 60 may be spliced together in a known manner, such as by fusion splicing, and the spliced connection held in the splice area 164.

As illustrated in Figs. 10 and 11, in one embodiment, the outgoing optical fibers 44 may be routed from the front of the splice module 42 along one side of the splice module 42 toward the rear of the splice module 42. The embodiment shown in Fig. 10, for example, illustrates the outgoing optical fibers 44 being routed away from the front of the splice module 42 on the left side of the splice module 42 (e.g., when viewed from the front of the splice module 42). In an alternative embodiment, the outgoing optical fibers 44 may be routed away from the front of the splice module 42 on the right side of the splice module 42, as explained below. The outgoing optical fibers 44 are routed along a fiber path indicated by arrow C in these figures. More particularly, the outgoing optical fibers 44 are terminated by a plurality of fiber optic connectors 70 that are received in the front connector ports 66 defined by the adapters 64 in the patch panel 56. In one embodiment, the outgoing optical fibers 44 may be routed along an extendable elbow joint 208 and toward the rear of the splice module 42. The outgoing optical fibers 44 may be supported by the fiber platform 202 and/or the guide fingers 204 associated with the patch panel 56. As clearly demonstrated in the figures, the outgoing optical fibers 44 do not intersect or crisscross the incoming optical fibers 32 or the pigtail optical fibers 60.

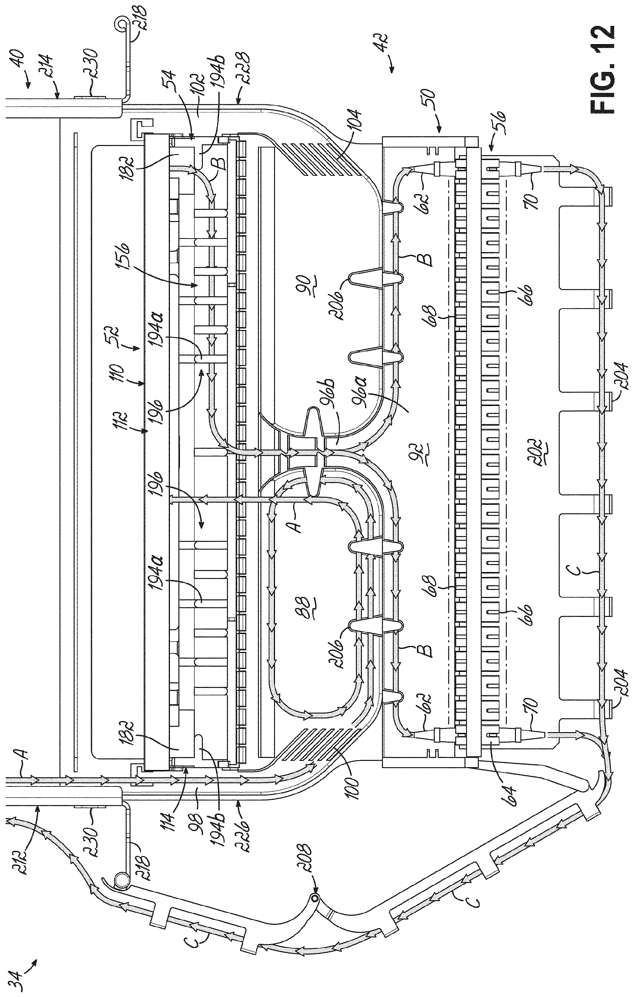

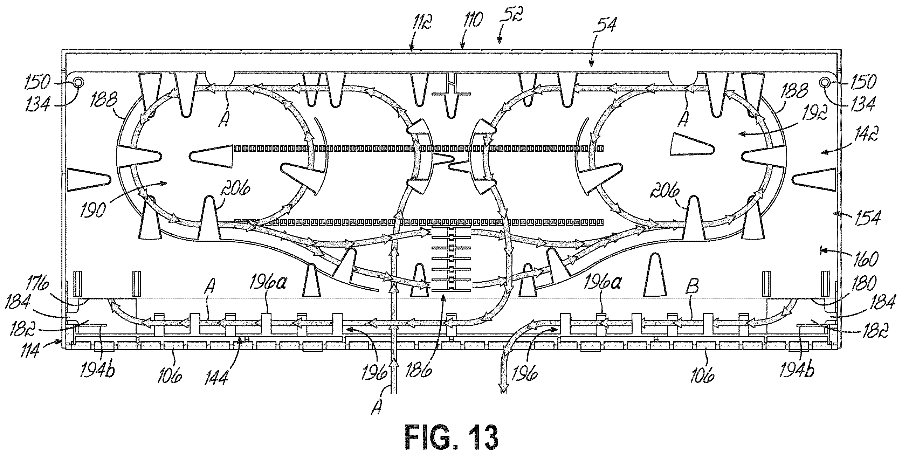

Figs. 12 and 13 illustrate an arrangement of the incoming optical fibers 32 of the splice module 42 in accordance with an alternative embodiment. This embodiment is similar to that shown in Figs. 10 and 11 but instead of the incoming optical fibers 32 being routed directly to the splice area 164 of the splice tray 54, the incoming optical fibers 32 are first routed to the splitter section 154 on the lower surface 160 of the splice tray 54 to splice the incoming optical signal carried by the oncoming optical fibers 32. In this regard, the incoming optical fibers 32 exit the first incoming fiber region 88 adjacent the central axis 94 of the base housing 50 and adjacent to rear edge 82b of the base wall 74, bypass (or extend through) the guide section 156 and enter the splitter section 154 of the splice tray 56, and more particularly the first splitter region 190 thereof, along its central region. The incoming optical fibers 32 may be initially contained in the first splitter region 190. For example, the incoming optical fibers 32 may be arranged in a coil in the first splitter region 190. To control and guide the incoming optical fibers 32 when in the first splitter region 190, the splice tray 54 may include one or more guide tabs 206 distributed about the first splitter region 190. The incoming optical fibers 32 are ultimately routed to the input side of the optical splitters (not shown) in the splitter area 186. The incoming optical fibers 32 on the output side of the optical splitters in the splitter area 186, which are more numerous than the incoming optical fibers 32 on the input side of the optical splitters, are initially contained in the second splitter region 192 and may be arranged in, for example, a coil in the second splitter region 192. To control and guide the incoming optical fibers 32 when in the second splitter region 192, the splice tray 54 may include one or more guide tabs 206 distributed about the second splitter region 192.

From the second splitter region 192, the incoming optical fibers 32 may be routed to the guide section 156 of the splice tray 56 along a central region thereof. The incoming optical fibers 32 may then be directed to the left and routed through the fiber channel 196 defined by the plurality of guide fingers 194 on the left side of the guide section 156. When the incoming optical fibers 32 reach the first side edges 146c, 148c of the top wall 142 and rear wall 144 respectively, the incoming optical fibers 32 may be inserted into the opening 182 on that side of the splice tray 54 via the slot 184. The incoming optical fibers 32 may then extend through the opening 182 and onto the upper surface 158 of the splice tray 54.

The routing of the incoming optical fibers 32 on the upper surface 158 of the splice tray 54 is the same in this embodiment as was described above for the embodiment shown in Figs. 10 and 11. The same can also be said for the routing of the pigtail optical fibers 60 and the outgoing optical fibers 44. Thus, a more detailed description of the fiber paths of these optical fibers will be omitted for sake of brevity. The main difference in this embodiment is that the optical signals in the incoming optical fibers 32 are split prior to being spliced to the pigtail optical fibers 60 in the splice area 164 of the splice tray 54.

While the embodiments in Figs. 10-13 illustrate the incoming optical fibers 32 and the outgoing optical fibers 44 entering/leaving the splice module 42 on the left side thereof, it should be understood that the splice module 42 is also configured to accommodate a configuration where the incoming optical fibers 32 and the outgoing optical fibers 44 enter/leave the splice module 42 on the right side of the splice module 42. As discussed above, depending on the routing architecture of the incoming fiber optic cables 30 and the outgoing fiber optic cables 46, these cables 30, 46 may be positioned on the right side of the splice module 42. The splice module 42 is configured to accommodate this arrangement of the cables 30, 46 and optical fibers 32, 44 as well.

By way of example, in this alternative embodiment, the incoming optical fibers 32 may enter the splice module 42 at the second fiber inlet 102 and may be initially contained in the second incoming fiber region 90. For example, the incoming optical fibers 32 may be arranged in a coil in the second incoming fiber region 90. The base housing 50 may include one or more guide tabs 206 to facilitate controlling and guiding the incoming optical fibers 32 within the second incoming fiber region 90. In one embodiment, the incoming optical fibers 32 may bypass the splitter section 154 of the splice tray 54 and instead be directed toward the splice area 164. In this regard, the incoming optical fibers 32 may exit the second incoming fiber region 90 adjacent the central axis 94 of the base housing 50 and adjacent to rear edge 82b of the base wall 74 and enter the guide section 156 of the splice tray 56 along a central region thereof. The incoming optical fibers 32 may then be directed to the right and routed through the fiber channel 196 defined by the plurality of guide fingers 194 on the right side of the guide section 156. When the incoming optical fibers 32 reach the second side edges 146d, 148d of the top wall 142 and rear wall 144, respectively, the incoming optical fibers 32 may be inserted into the opening 182 on that side of the splice tray 54 via the slot 184. The incoming optical fibers 32 may then extend through the opening 182 and onto the upper surface 158 of the splice tray 54.

Once onto the upper surface 158 of the splice tray 54, the incoming optical fibers 32 may be routed from the opening 184 on the right side of the splice tray 54 and into the second splice fiber region 170 of the splice region 156. The incoming optical fibers 32 may be initially contained in the second splice fiber region 170 and may be arranged in a coil in the excess fiber area 178. From the excess fiber area 178, the incoming optical fibers 32 may be routed to the second inlet array 174 of the splice area 164 where the incoming optical fibers 32 may be spliced to the pigtail optical fibers 60.

In this alternative embodiment, the pigtail optical fibers 60 may be terminated by fiber optic connectors 62 which are received in the rear connector ports 68 defined by the adapters 64 of the patch panel 56. The pigtail optical fibers 60 may be routed from the patch panel 56, into the intermediate fiber region 92, and through the fiber channel portion 96b along the central axis 94 toward the rear edge 82b of the base wall 74. The pigtail optical fibers 60 may be initially contained in the intermediate fiber region 92.

The pigtail optical fibers 60 may then exit the intermediate fiber region 92 adjacent the central axis 94 of the base housing 50 and adjacent to rear edge 82b of the base wall 74 and enter the guide section 156 of the splice tray 56 along a central region thereof. The pigtail optical fibers 60 may then be directed to the left and routed through the fiber channel 196 defined by the plurality of guide fingers 194 on the left side of the guide section 156. When the pigtail optical fibers 60 reach the first side edges 146c, 148c of the top wall 142 and rear wall 144, respectively, the pigtail optical fibers 60 may be inserted into the opening 182 on that side of the splice tray 54 via the slot 184. The pigtail optical fibers 60 may then extend through the opening 182 and onto the upper surface 158 of the splice tray 54.

Once onto the upper surface 158 of the splice tray 54, the pigtail optical fibers 60 may then be routed from the opening 184 on the left side of the splice tray 54 and into the first splice fiber region 168 of the splice section 156. The pigtail optical fibers 60 may be initially contained in the first splice fiber region 168 and may be arranged in a coil in the excess fiber area 178. From the excess fiber area 178, the pigtail optical fibers 60 may be routed to the first inlet array 174 of the splice area 164, where the pigtail optical fibers 60 may be spliced to the incoming optical fibers 32. Indeed, once the incoming optical fibers 32 and the pigtail optical fibers 60 have been routed to the splice area 164, the ends of the optical fibers 32, 60 may be spliced together in a known manner, such as by fusion splicing, and the spliced joint held in the splice area 164.

The outgoing optical fibers 44 may be routed from the front of the splice module 42 along the right side of the splice module 42. The outgoing optical fibers 44 may be terminated by a plurality of fiber optic connectors 70 that are received in the front connector ports 66 defined by the adapters 64 in the patch panel 56. In one embodiment, the outgoing optical fibers 44 may be routed along an extendable elbow joint 208, now on the right side of the splice module 42, and toward the rear of the splice module 42. The outgoing optical fibers 44 may be supported by the fiber platform 202 and/or the guide fingers 204 associated with the patch panel 56.

In a further alternative embodiment of the above (not shown), the incoming optical fibers 32 may be directed to the splitter section 154 of the splice tray 54 prior to being directed to the splice area 164 in the splice section 152 of the splice tray 54. This embodiment is similar to that described above for Figs. 12 and 13 except that the incoming optical fibers 32 exit the second incoming fiber region 90 adjacent the central axis 94 of the base housing 50 and adjacent to rear edge 82b of the base wall 74, bypass (or extend through) the guide section 156, and enter the splitter section 154 of the splice tray 56, and more particularly the second splitter region 192 thereof, along its central region. The incoming optical fibers 32 may be initially contained in the second splitter region 192 and may be arranged in a coil. The incoming optical fibers 32 are ultimately routed to the input side of the optical splitters (not shown) in the splitter area 186, which are inverted compared to that in Figs. 12 and 13. The incoming optical fibers 32 on the output side of the optical splitters in the splitter area 186, which are more numerous than the incoming optical fibers 32 on the input side of the optical splitters, are initially contained in the first splitter region 190 and may be arranged in, for example, a coil in the first splitter region 190.

From the first splitter region 190, the incoming optical fibers 32 may be routed to the guide section 156 of the splice tray 56 along a central region thereof. The incoming optical fibers 32 may then be directed to the right and routed through the fiber channel 196 defined by the plurality of guide fingers 194 on the right side of the guide section 156. When the incoming optical fibers 32 reach the second side edges 146d, 148d of the top wall 142 and rear wall 144, respectively, the incoming optical fibers 32 may be inserted into the opening 182 on that side of the splice tray 54 via the slot 184. The incoming optical fibers 32 may then extend through the opening 182 and onto the upper surface 158 of the splice tray 54. The routing of the incoming optical fibers 32 on the upper surface 158 of the splice tray 54 is the same in this embodiment as was described above for the alternative embodiment. The same may also be said for the routing of the pigtail optical fibers 60 and the outgoing optical fibers 44 in this alternative embodiment. Thus, a more detailed description of the fiber paths of these optical fibers will be omitted for sake of brevity.

The splice module 42 provides a number of benefits relative to conventional splice modules. In this regard, for example, as noted in the description above, the splice module 42 is compartmentalized into various regions that hold different kinds of optical fibers (e.g., incoming optical fibers 32 and pigtail optical fibers 60 separate from each other). For example, compartmentalizing the space of the splice module 42 prevents intersections between the incoming optical fibers 32 and the pigtail optical fibers 60 within the splice module 42. Additionally, the fiber paths associated with the incoming optical fibers 32 and the pigtail optical fibers 60 avoid or minimize intersections, crisscrossing, etc. of the optical fibers 32, 60 in the splice module 42. By arranging the optical fibers 32, 60 associated with the splice module 42 in this manner, organization is enhanced and troubleshooting the splice module 42 becomes more tractable.

Additionally, the splice module 42 is configured to protect the spliced connections within the splice module 42. In this regard, the splice tray 54 is carried by the cover 52 and moves with the cover 52 between the opened position and the closed position of the cover 52 relative to the base housing 50. The splice tray 54 is also moveable relative to the cover 42 between an opened and closed position. When the splice tray 54 is in the closed position and the cover 52 is in the closed position, the splice module 10 has a compact design and the spliced connections are positioned within and protected by the splice module 42, and more particularly the cover 52 thereof. When the cover 52 is in the opened position and the splice tray 54 is in the closed position, the spliced connections remain protected by the cover 52 but the interior cavity 80 of the base housing 50 is accessible. Thus, technicians or the like may make additions, changes, repairs, etc. as necessary without unintentionally damaging the spliced connections in the splice tray 54. Moreover, when the cover 52 is in the opened position and the splice tray 54 is in the opened position, the splice section 152, including the splice area 164 and the spliced connections made therein, are accessible by technicians. Thus, accessing the spliced connections become a deliberate act by the technician and unintentional damage to the splice connections may be reduced or avoided.

In reference to Figs. 2-6, in an exemplary embodiment, the rack mount assembly 34 includes a pair of mounting brackets 212, 214 and the splice module 42. Each mounting bracket 212, 214 includes a slide rail 216 having a front end and a rear end, and a front flange 218 extending from the front end of the slide rail 216. In an exemplary embodiment, the front flange 218 extends from the front end of the slide rail 216 in a substantially perpendicular manner; however, other angles may be possible. The front flange 218 includes one or more openings 220 for fixing the mounting brackets 212, 214 to the vertical frame members 38 of the equipment rack 28, such as with suitable fasteners (e.g., bolts, clips, pins, etc.). In one embodiment, each slide rail 216 may have a U-shaped profile including a base wall 222 and end walls 224 at the opposed ends of the base wall 222. Other configurations of the slide rails 216 may be possible in alternative embodments.

In this embodiment, the splice module 42 is configured to be movably connected to the mounting brackets 212, 214 so as to be moveable between a retracted position, where the splice module 42 may be positioned within the equipment rack 28 and (internally) inaccessible by technicians or the like, and an extended position, where the splice module 42 may be positioned away from the equipment rack 28 and (internally) accessible by technicians. By way of example, and without limitation, in this embodiment, the splice module 42 is configured to be slidable relative to the mounting brackets 212, 214 between the retracted position and the extended position.

In this regard, the splice module 42 may include a pair of slider arms 226, 228 connected to the base housing 50 and extending rearwardly of the base housing 50. In one embodiment, the slider arms 226, 228 may be integrally formed with the base housing 50. In an alternative embodiment, however, the slider arms 226, 228 may be separate elements that are attached to the base housing 50. In one embodiment, for example, the slider arms 226, 228 may be extensions of the first side wall 76 and the second side wall 78 and extend beyond and spaced from the rear edge 82b of the base wall 74. Additionally, the slide arms 226, 228 may include a tab or detent 230 on their outer-facing surfaces to facilitate the sliding movement of the splice module 42 relative to the mounting brackets 212, 214.

For example, as illustrated in the figures, the base wall 222 of each of the slide rails 216 of the mounting brackets 212, 214 may include an elongate slot 232 extending along a substantial portion of the rail 216. When the splice module 42 is connected to the mounting brackets 212, 214, the detent 230 on each of the slide rails 216 extends through the slot 232 to at least partially support the splice module 42 within the mounting brackets 212, 214. Additionally, the detent 230/slot 232 engagement also allows the splice module 42 to be moved, i.e., slid, relative to the mounting brackets 212, 214 between the retracted position and the extended position. In this regard, as the splice module 42 is moved, the detent 230 slidingly moves within the slot 232, thereby permitting the splice module 42 to move between its retracted position and extended position. Additionally, the elbow joint 208 flexes so that the outgoing optical fibers 44 are not strained during movement between the retracted position and the extended position. In one embodiment, the elbow joint 208 may be connected to the mounting bracket 212, such as at flange 218 and be further connected to the splice module 42. It should be appreciated that if the outgoing optical fibers exit on the right side of the splice module 42, the elbow joint 208 may be connected to mounting bracket 214 instead of mounting bracket 212.

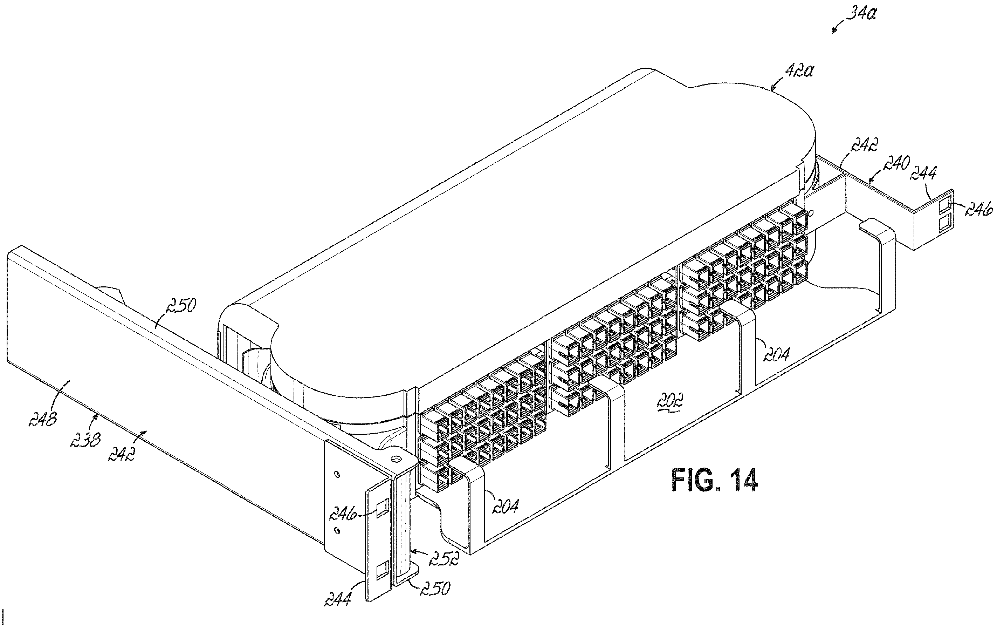

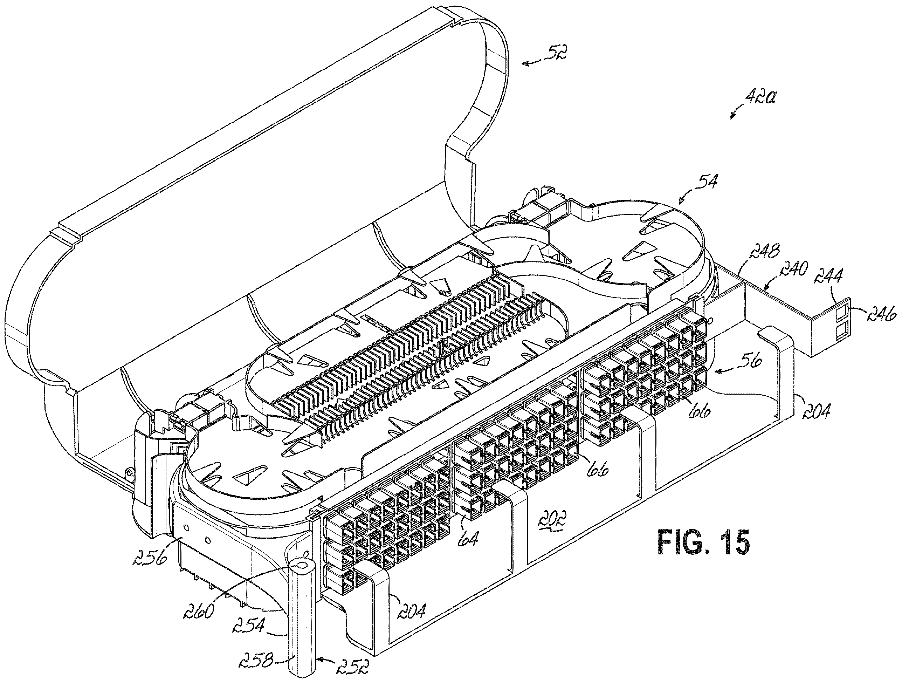

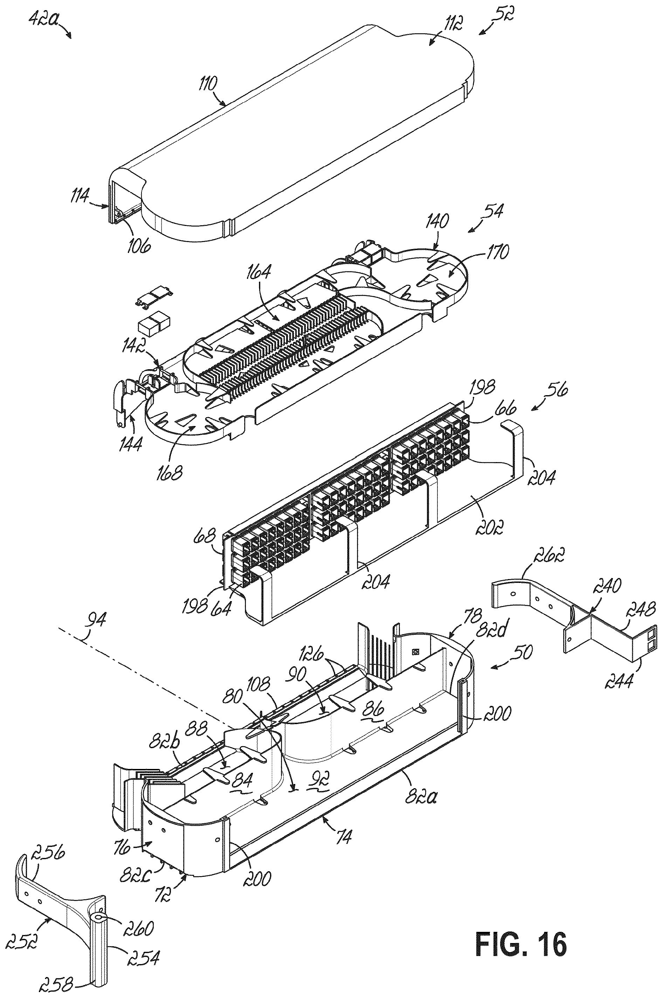

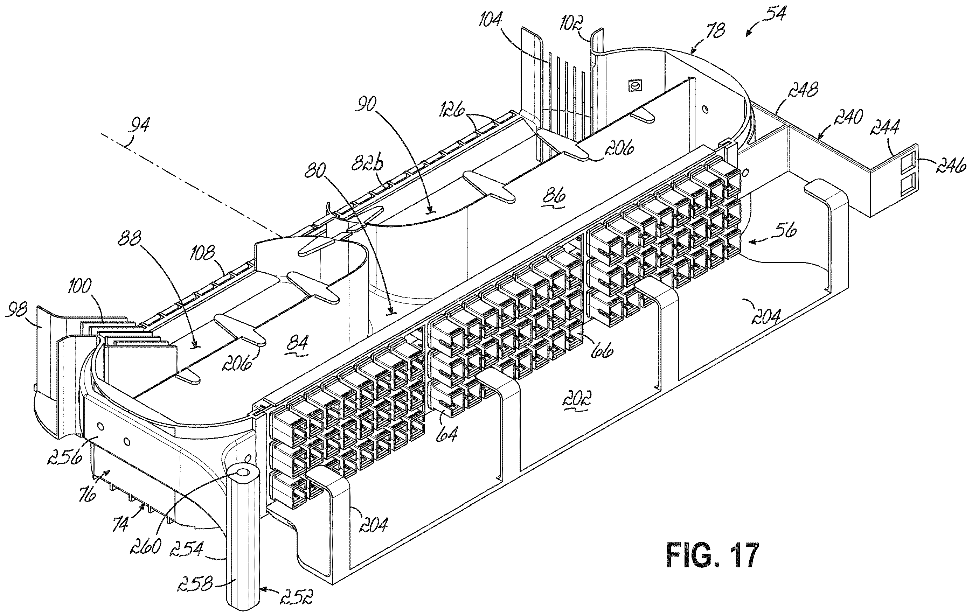

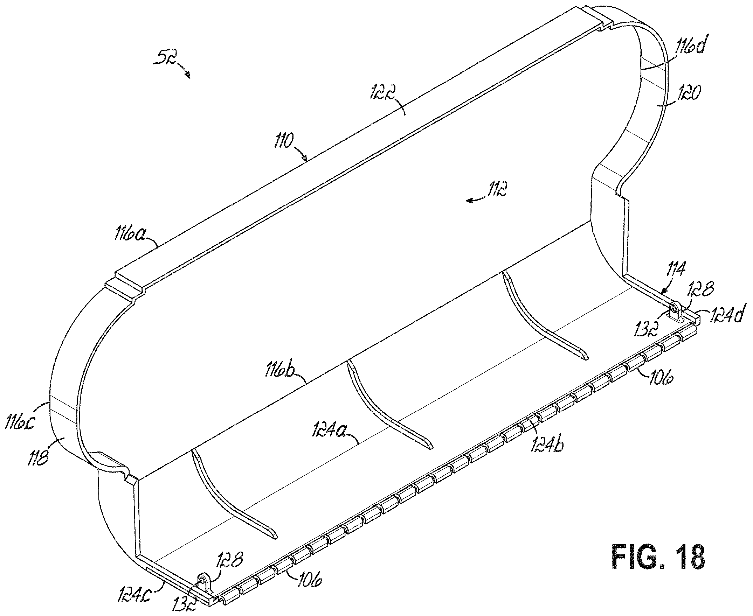

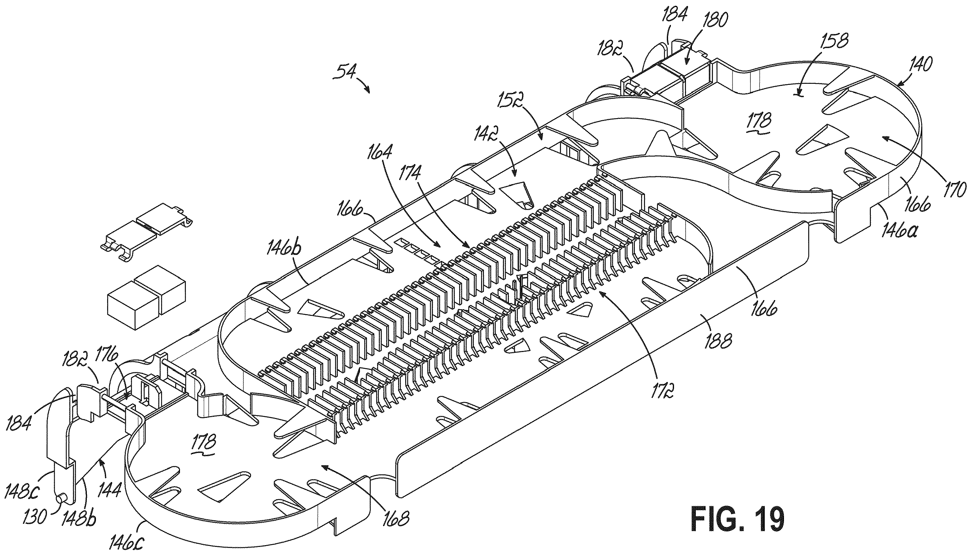

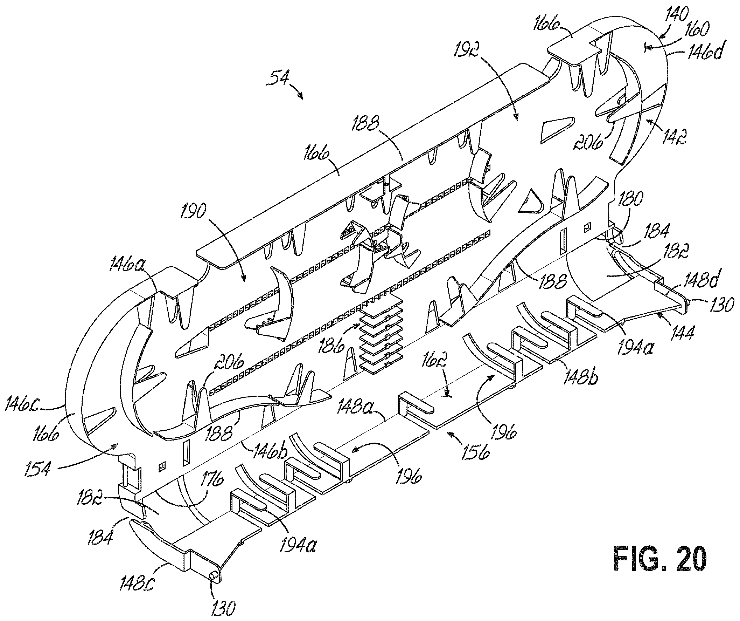

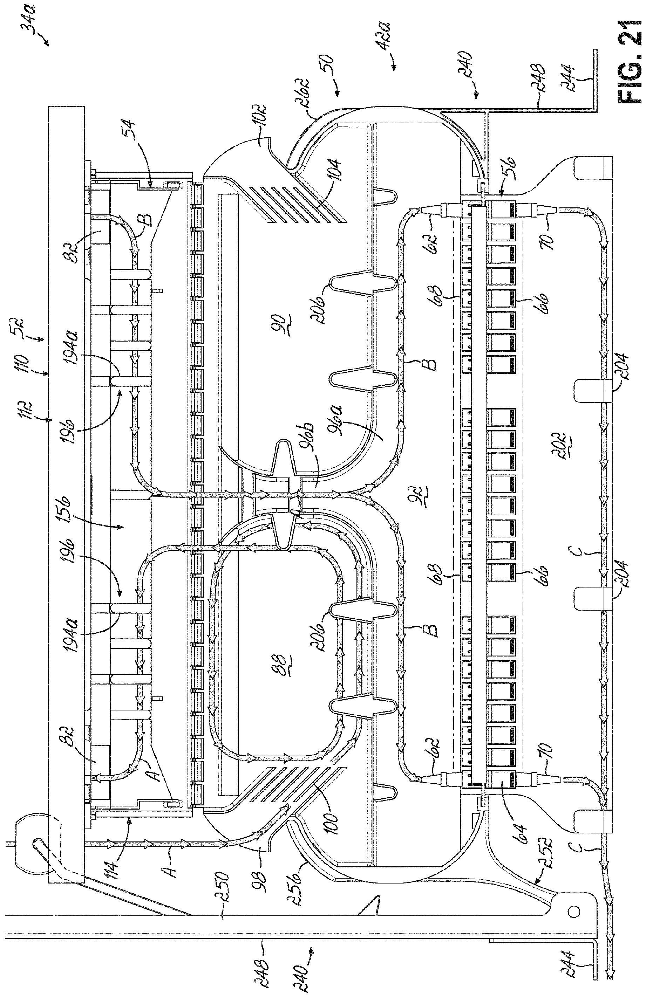

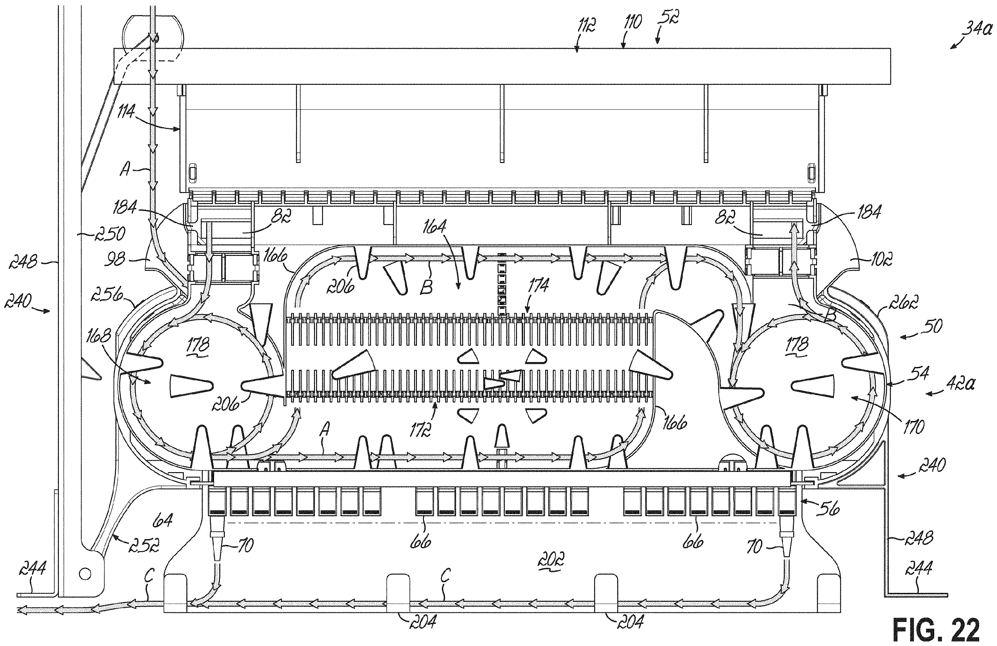

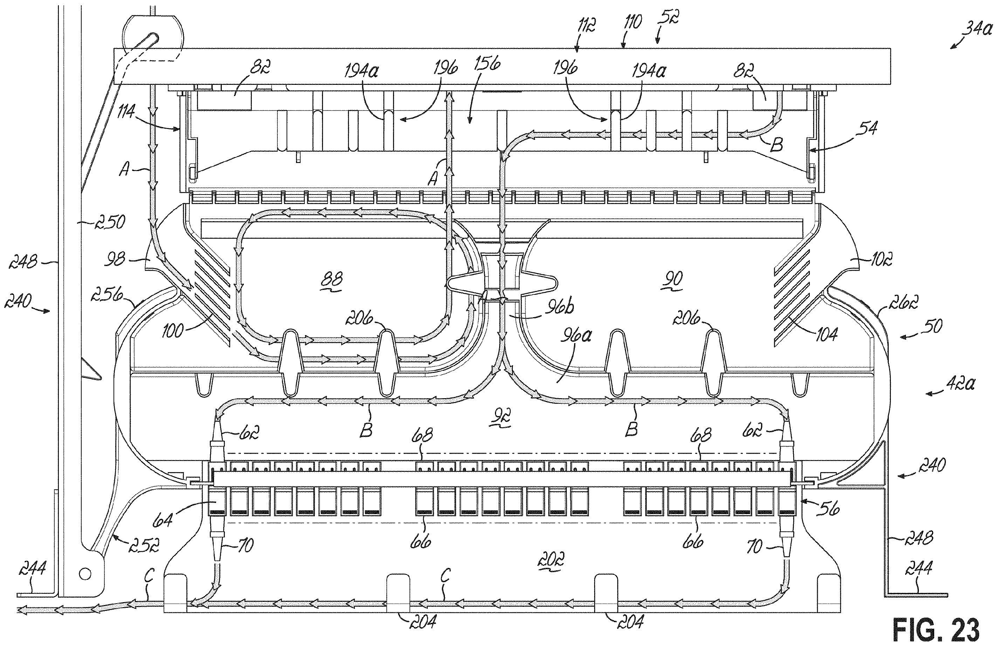

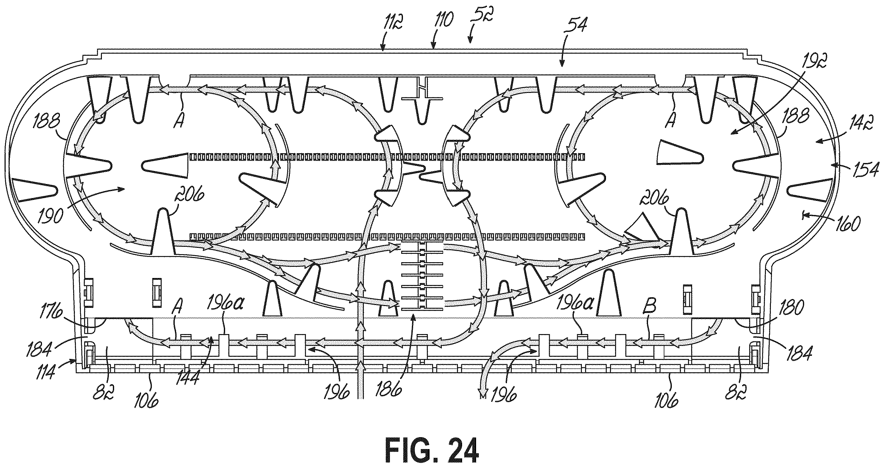

Figs. 14-24 illustrate another embodiment of a splice module 42a in accordance with the disclosure. In these figures, like reference numbers refer to similar features illustrated in Figs. 3-13. Like the embodiment described above, the splice module 42a includes the same primary components of a base housing 50, a cover 52, a splice tray 54, and a patch panel 56. The size and shape of the various components may be slightly different than that shown above but the overall structure and operation of the various components generally remain the same. Accordingly, a detailed description of the splice module 42a is deemed unnecessary for a full understanding to the splice module 42a and its operation. Accordingly, such a detailed description of the splice module 42a will be omitted here for sake of brevity. Instead, the following will focus on the primary differences between the two splice modules 42, 42a.

In this regard, one primary difference involves the manner in which the rack mount assembly 34a, having the splice module 42a, is connected to the equipment rack 28 in which it is installed. In the embodiment illustrated in Figs. 3-13, the rack mount assembly 34, which includes the splice module 42, is configured such that the splice module 42 is slidable relative to the equipment rack 28 between the retracted position and the extended position. However, in the embodiment illustrated in Figs. 14-24, the splice module 42a is configured to be pivotable or rotatable relative to the equipment rack 28 between the retracted position and the extended position.

To this end, and in an exemplary embodiment, the rack mount assembly 34a includes a pair of mounting brackets 238, 240 and the splice module 42a. Each mounting bracket 238, 240 may include an elongate rail 242 having a front end and a rear end, and a front flange 244 extending from the front end of the elongate rail 242. In an exemplary embodiment, the front flange 244 may extend from the front end of the elongate rail 242 in a substantially perpendicular manner; however, other angles may be possible. The front flange 244 may include one or more openings 246 for fixing or releasably fixing the mounting brackets 238, 240 to the vertical frame members 38 of the equipment rack 28, such as with suitable fasteners (e.g., bolts, clips, pins, etc.).

In one embodiment, the elongate rail 242 of the first mounting bracket 238 may have a U-shaped profile including a base wall 248 and end walls 250 at the opposed ends of the base wall 248. The mounting bracket 238 may further include a pivot arm 252 that is rotatably connected to the elongate rail 242 of the mounting bracket 238. By way of example, the pivot arm 252 may be rotatably connected to the elongate rail 242 adjacent the first end (adjacent the front flange 244). The pivot arm 252 may, however, be connected to the elongate rail 242 at other locations along the length of the elongate rail 242. In one embodiment, the pivot arm 252 may include a pivot post 254 at one end of the pivot arm 252 and a first module connection interface 256 at the other end of the pivot arm 252. The pivot post 254 may include a tubular body 258 and a passageway 260 extending therethrough. The pivot post 254 is configured to be rotatably connected to the first mounting bracket 238, such as by a pivot pin or axle extending through the passageway 260 of the pivot post 254 and about which the pivot arm 252 is able to rotate. The first module connection interface 256 may be generally C-shaped and is configured to be connected to a correspondingly C-shaped portion of the splice module 42a. For example, in one embodiment, the first side wall 76 of the base housing 50 may be arcuate and configured to mate with the first module connection interface 256 of the pivot arm 252. In this regard, for example, various fasteners (screws, bolts, clips, etc.) may be used to connect the splice module 42a to the module connection interface 256 of the pivot arm 252. It should be appreciated that in alternative embodiments, the shape of the first module connection interface 256 and the splice module 42a may have other corresponding shapes and should not be limited to that shown and described herein.

In one embodiment, the elongate rail 242 of the second mounting bracket 240 may be different from the first mounting bracket 238 and include a base wall 248 without any end walls at the opposed ends of the base wall 248. Additionally, the second mounting bracket 240 may not include a pivot arm or the like. However, the second mounting bracket 240 may include a second module connection interface 262 adjacent the second end of the elongate rail 242. The second module connection interface 252 may be generally C-shaped and is configured to be connected to a correspondingly C-shaped portion of the splice module 42a. For example, in one embodiment, the second side wall 78 of the base housing 50 may be arcuate and configured to mate with the second module connection interface 262 of the second mounting bracket 240. In this regard, for example, various fasteners (screws, bolts, clips, etc.) may be used to connect the splice module 42a to the second module connection interface 262 of the second mounting bracket 240. It should be appreciated that in alternative embodiments, the shape of the first module connection interface 256 and the splice module 42a may have other corresponding shapes and should not be limited to that shown and described herein.

When the splice module 42a is in the retracted position, both mounting brackets 238, 240 may be connected to the vertical frame members 38 of the equipment rack 28 to support the rack mount assembly 34a in the equipment rack 28. When it is desired to move the splice module 42a from the retracted position to the extended position, the fastener connecting the second mounting bracket 240 to the vertical frame member 38 may be released. This allows the second mounting bracket 240 and the splice module 42a to which it is attached to be rotated about the pivot axis defined by the pivot post 254 of the first mounting bracket 238, which remains fastened to the vertical frame member 38 of the equipment rack 28. In this retracted position, the internal components of the splice module 42a may be accessed by a technician or the like. Once the technician has completed their task, the splice tray 54 and the cover 52 may be closed and the splice module 42a rotated back to the retracted position in the equipment rack 28 and the second mounting bracket 240 fastened back to the vertical frame member 38 of the equipment rack 28.

While the present disclosure has been illustrated by the description of specific embodiments thereof, and while the embodiments have been described in considerable detail, it is not intended to restrict or in any way limit the scope of the appended claims to such detail. The various features discussed herein may be used alone or in any combination within and between the various embodiments. Additional advantages and modifications will readily appear to those skilled in the art. The disclosure in its broader aspects is therefore not limited to the specific details, representative apparatus and methods and illustrative examples shown and described. Instead, it should be evident that departures may be made from such details without departing from the scope of the disclosure.

## Claims

1. A splice module for a fiber optic network, the splice module for optically connecting a plurality of first optical fibers of the fiber optic network to a plurality of second optical fibers of the fiber optic network via a plurality of intermediate optical fibers, the splice module comprising:
a base housing defining an interior cavity and configured to receive the plurality of first optical fibers and the plurality of intermediate optical fibers, the base housing further defining a central axis;
a cover attached to the base housing and moveable between an opened position, where the interior cavity is accessible from an exterior of the splice module, and a closed position, where the interior cavity is inaccessible from the exterior of the splice module; and
a splice tray attached to the cover and including a splice area configured to receive spliced connections between the plurality of first optical fibers and the plurality of intermediate optical fibers,
wherein when the cover is in the opened position, the splice tray is moveable relative to the cover between an opened position, where the splice area is accessible from the exterior of the splice module, and a closed position, where the splice area is inaccessible from the exterior of the splice module.

2. The splice module of claim 1, wherein the base housing comprises:
a base wall defining a front edge, a rear edge, a first side edge, and a second side edge;
a first side wall extending along at least a portion of the first side edge of the base wall; and
a second side wall extending along at least a portion of the second side edge of the base wall,
wherein the base wall further includes at least one dividing wall that defines: i) a first fiber region; ii) a second fiber region; and iii) an intermediate fiber region of the interior cavity, wherein each region is separated from an adjacent region by the at least one dividing wall, and
wherein the plurality of first optical fibers is configured to be received in one of the first fiber region or the second fiber region and the plurality of intermediate optical fibers is configured to be received in the intermediate fiber region.

3. The splice module of claim 2, wherein the at least one dividing wall comprises:
a first dividing wall extending from the first side wall; and
a second dividing wall extending from the second side wall,
wherein each of the first dividing wall and the second dividing wall is J-shaped, extends from its respective side wall toward the rear edge of the base wall, and terminates adjacent the central axis.

4. The splice module of claim 2 or 3, wherein the first fiber region is adjacent to the intermediate fiber region, wherein the second fiber region is adjacent to the intermediate fiber region, and wherein the first fiber region and the second fiber region are separated from each other by a portion of the intermediate fiber region;
wherein the portion of the intermediate fiber region between the first fiber region and the second fiber region defines a fiber channel open to the rear edge of the base wall and is configured to receive the plurality of intermediate optical fibers therein.

5. The splice module of any of claims 2-4, wherein the first fiber region includes a portion of the rear edge of the base wall adjacent the first side wall, and wherein the second fiber region includes a portion of the rear edge of the base wall adjacent the second side wall.

6. The splice module of any of claims 2-5, wherein the first fiber region includes a first inlet and a first strain relief element adjacent the first inlet, and wherein the second fiber region includes a second inlet and a second strain relief element adjacent the second inlet.

7. The splice module of any of claims 2-6, wherein the first side wall includes a first groove adjacent the front edge of the base wall, wherein the second side wall includes a second groove adjacent the front edge of the base wall, the splice module further comprising:
a patch panel received in the first groove and the second groove of the base housing, the patch panel having a plurality of openings and a plurality of adapters, wherein each of the plurality of adapters is received in a respective one of the plurality of openings in the patch panel, and wherein each of the plurality of adapters comprises:
at least one front port configured to receive a fiber optic connector associated with the plurality of second optical fibers; and
at least one rear port configured to receive a fiber optic connector associated with the plurality of intermediate optical fibers.

8. The splice module of claim 7, further comprising the plurality of intermediate optical fibers, wherein the plurality of intermediate optical fibers includes a plurality of intermediate fiber optic connectors, and wherein each of the plurality of intermediate fiber optic connectors is received in a respective one of the at least one rear port of the plurality of adapters in the patch panel.

9. The splice module of any of the preceding claims, wherein the cover has an L-shaped configuration, comprising:
a top wall having a front edge, a first side edge, and a second side edge; and
a rear wall extending from a rear of the top wall and having a lower edge, a first side edge, and a second side edge;
wherein the cover is pivotally attached to the base housing at the lower edge of the rear wall.

10. The splice module of claim 9, wherein the cover further comprises:
a first hinge boss adjacent the first side edge of the rear wall; and
a second hinge boss adjacent the second side edge of the rear wall,
wherein the splice tray is pivotally attached to the cover at the first hinge boss and the second hinge boss.

11. The splice module of claim 9 or claim 10, wherein the front edge of the top wall of the cover includes a front wall extending therefrom, and wherein an outer surface of the front wall includes indicia for making fiber optic connections.

12. The splice module of any of claims 9-11, wherein the cover includes at least one closure element for retaining the splice tray in the closed position relative to the cover.

13. The splice module of any of the preceding claims, further comprising:
a first slider extending from the rear edge of the base wall adjacent the first side wall; and
a second slider extending from the rear edge of the base wall adjacent the second side wall,
wherein the splice module is configured to be engaged with an equipment rack and slidable between a retracted position, where the splice module is located internal to the equipment rack, and an extended position, where the splice module is located external to the equipment rack.

14. A rack mount assembly for an equipment rack of a fiber optic network, comprising:
a first mounting bracket configured to be fixedly connected to the equipment rack;
a second mounting bracket configured to be fixedly connected to the equipment rack; and
the splice module of any of claims 1-13 mounted to the first mounting bracket and the second mounting bracket so as to be moveable relative to the equipment rack between a retracted position and an extended position;
wherein the splice module is slidable relative to the equipment rack between the retracted position and the extended position.

15. A rack mount assembly for an equipment rack of a fiber optic network, comprising:
a first mounting bracket configured to be connected to the equipment rack;
a second mounting bracket configured to be releasably connected to the equipment rack; and
the splice module of any of claims 1-13 mounted to the first mounting bracket and the second mounting bracket so as to be moveable relative to the equipment rack between a retracted position, where the splice module is located internal to the equipment rack, and an extended position, where the splice module is located external to the equipment rack;
wherein the splice module is pivotable relative to the equipment rack between the retracted position and the extended position.
